# EUROPEAN PATENT APPLICATION

(11) **EP 4 454 900 A1**
(43) Date of publication of application: **30.10.2024**
(21) Application number: 22911295.8
(22) Date of filing: 21.12.2022
(51) Int. Cl.: B41M 5/337, B41M 5/40, B41M 5/42, B41M 5/44, B32B 7/023, B32B 7/027

(54) **RECORDING MEDIUM AND LAMINATE**

(30) Priority: 22.12.2021 JP 2021208806
(71) Applicant: Sony Group Corporation, Tokyo 108-0075 (JP)
(72) Inventor: TAKAGI, Kenji, Tokyo 108-0075 (JP); MIZUNO, Hiroshi, Tokyo 108-0075 (JP); YAMANO, Ryota, Tokyo 108-0075 (JP); TEJIMA, Aya, Tokyo 108-0075 (JP)
(74) Representative: D Young & Co LLP
(86) International application number: PCT/JP2022/047186
(87) International publication number: WO 2023/120593

(57) **Abstract**

A recording medium capable of reducing a color gamut change is provided.

The recording medium includes a plurality of coloring layers and at least one diffusion reduction layer. Each of the coloring layers includes a coloring compound that is electron-donative, a developer that is electron-acceptive, and matrix resin. The diffusion reduction layer is provided between the coloring layers adjacent to each other. The diffusion reduction layer is capable of reducing diffusion of the coloring compound between the coloring layers adjacent to each other during heating of the recording medium.

## Description

### [Technical Field]

The present disclosure relates to a recording medium and a laminate including the recording medium.

### [Background Art]

It has been promoted in recent years to develop, as a recording medium constituting a replacement for printed matter, a recording medium which includes a coloring layer containing an electron-donative coloring compound and an electron-acceptive developer. PTL 1 discloses a recording medium which includes a plurality of laminated coloring layers.

### [Citation List]

### [Patent Literature]

[PTL 1]
PCT Patent Publication No. WO2018/092488

### [Summary]

### [Technical Problem]

However, the recording medium including the plurality of laminated coloring layers has a color gamut which is changeable in some cases. Accordingly, there is a demand for reducing the change of the color gamut.

An object of the present disclosure is to provide a recording medium capable of reducing a change of a color gamut and a laminate including the recording medium.

### [Solution to Problem]

For solving the problem described above, a recording medium according to the present disclosure includes a plurality of coloring layers and at least one diffusion reduction layer. Each of the coloring layers includes a coloring compound that is electron-donative, a developer that is electron-acceptive, and matrix resin. The diffusion reduction layer is provided between the coloring layers adjacent to each other, and the diffusion reduction layer is capable of reducing diffusion of the coloring compound between the coloring layers adjacent to each other during heating of the recording medium.

A laminate according to the present disclosure includes the recording medium according to the present disclosure, a base material, and an overlay layer. The recording medium is provided between the base material and the overlay layer.

### [Brief Description of Drawings]

[FIG. 1]

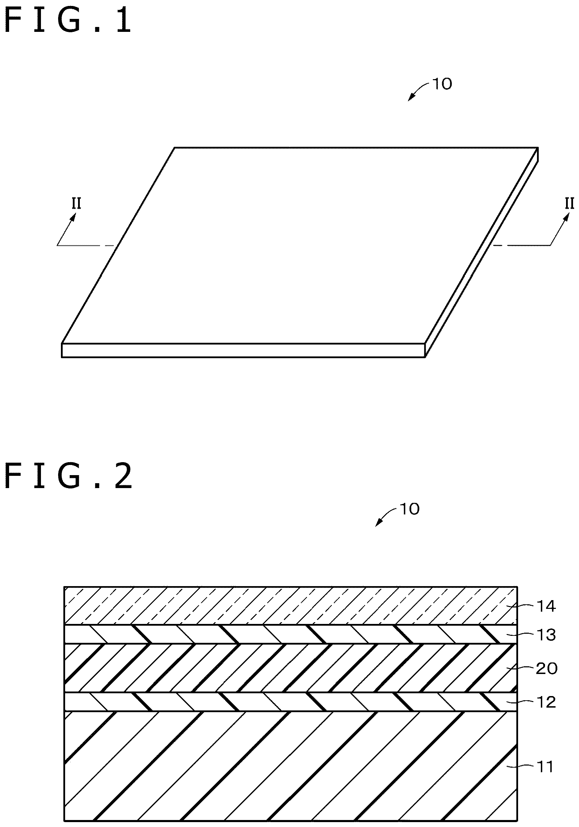

   FIG. 1 is a perspective diagram of a laminate according to a first embodiment of the present disclosure.
[FIG. 2]
   FIG. 2 is a cross-sectional diagram taken along a line II-II in FIG. 1.
[FIG. 3]

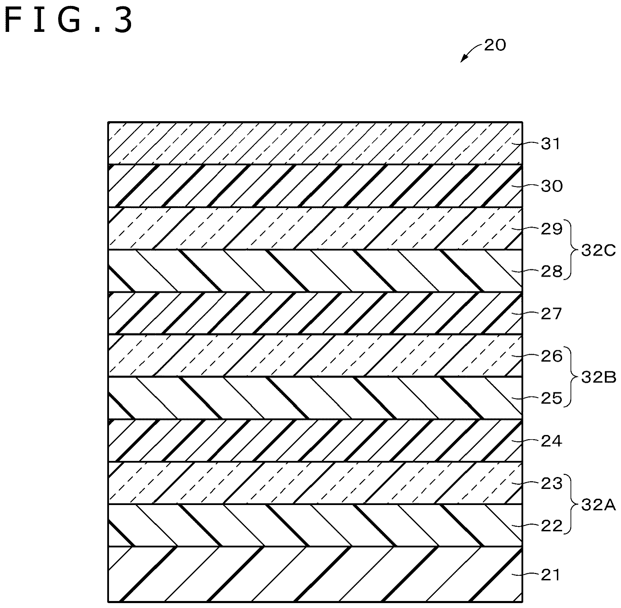

   FIG. 3 is a cross-sectional diagram of a recording medium.
[FIG. 4]

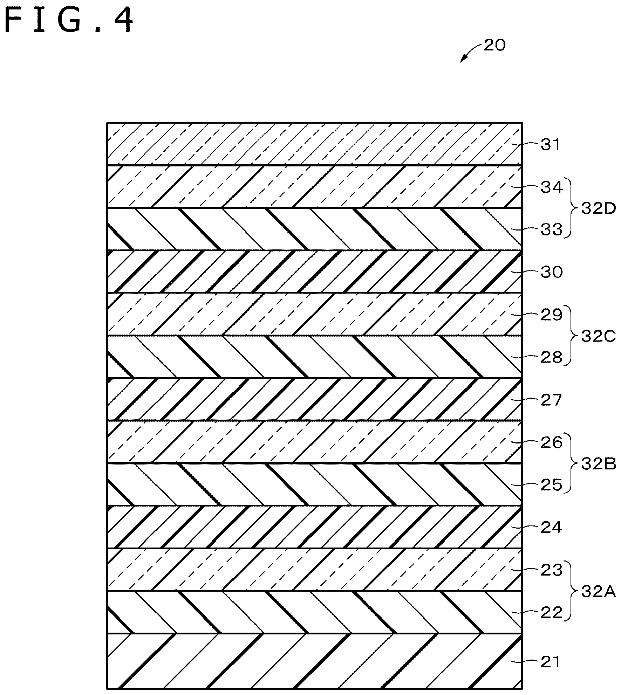

   FIG. 4 is a cross-sectional diagram of the recording medium.
[FIG. 5]

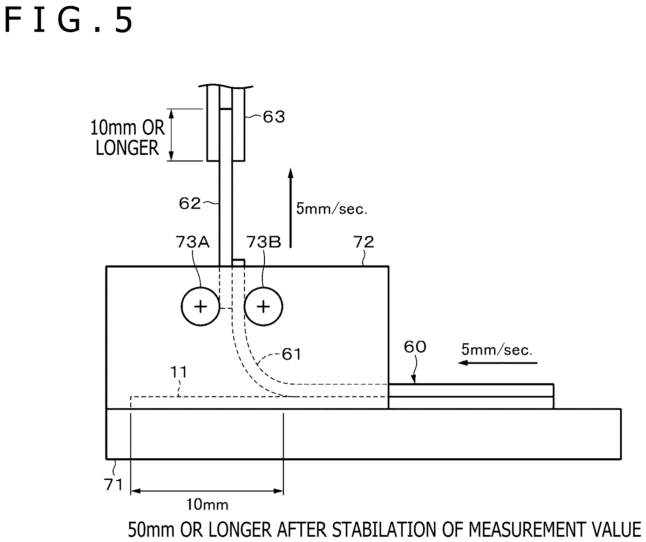

   FIG. 5 is a diagram of a test device performing a 90-degree peeling test.
[FIG. 6]

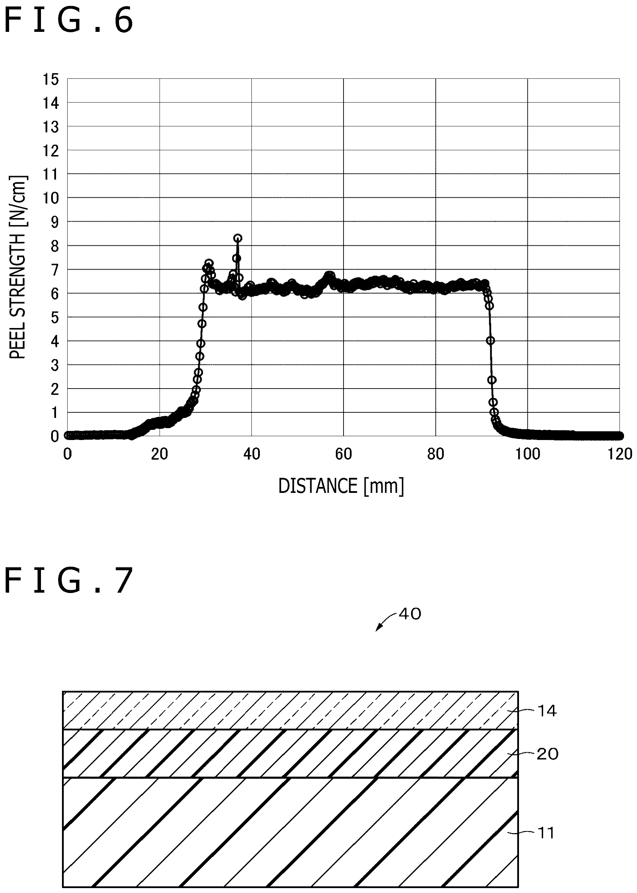

   FIG. 6 is a graph illustrating an example of data acquired by the 90-degree peeling test.
[FIG. 7]
   FIG. 7 is a cross-sectional diagram of a laminate according to a second embodiment of the present disclosure.
[FIG. 8]

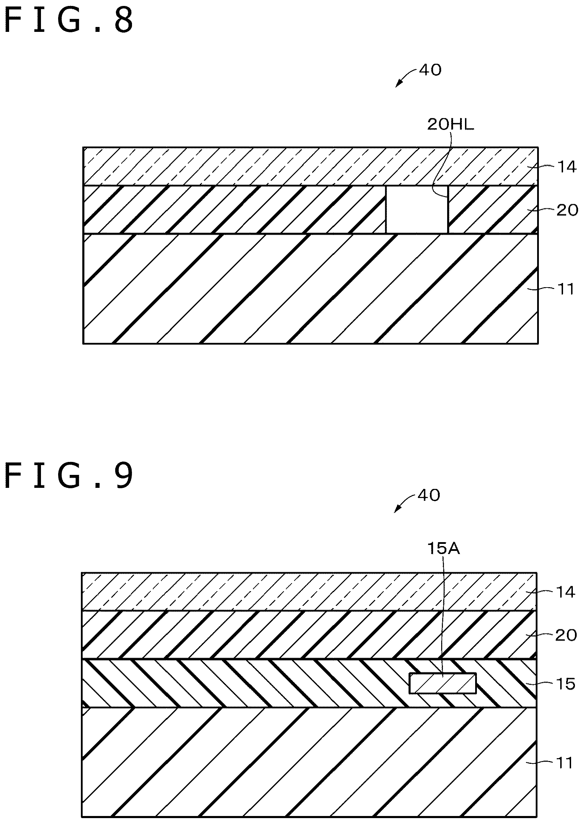

   FIG. 8 is a cross-sectional diagram of a laminate according to a modification of the second embodiment of the present disclosure.
[FIG. 9]
   FIG. 9 is a cross-sectional diagram of a laminate according to a modification of the second embodiment of the present disclosure.
[FIG. 10]

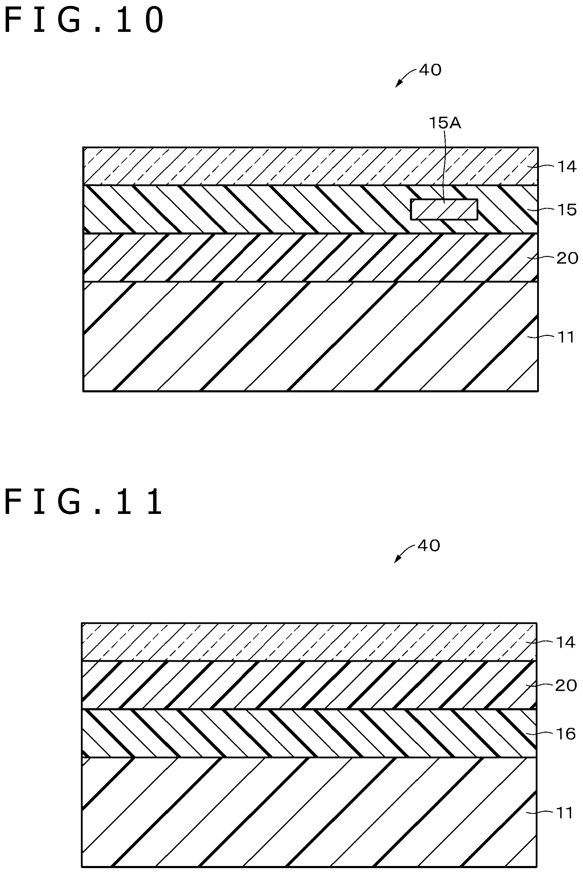

   FIG. 10 is a cross-sectional diagram of a laminate according to a modification of the second embodiment of the present disclosure.
[FIG. 11]
   FIG. 11 is a cross-sectional diagram of a laminate according to a modification of the second embodiment of the present disclosure.
[FIG. 12]

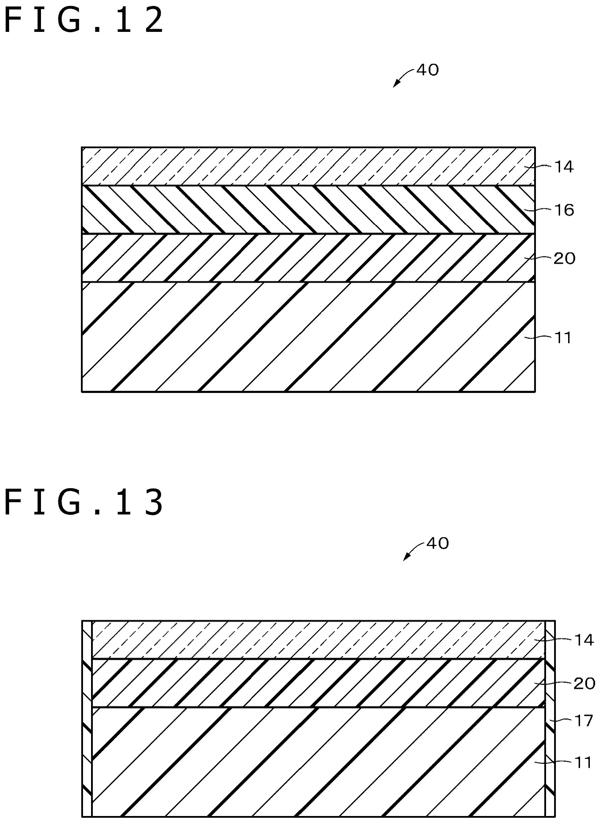

   FIG. 12 is a cross-sectional diagram of a laminate according to a modification of the second embodiment of the present disclosure.
[FIG. 13]
   FIG. 13 is a cross-sectional diagram of a laminate according to a modification of the second embodiment of the present disclosure.
[FIG. 14]

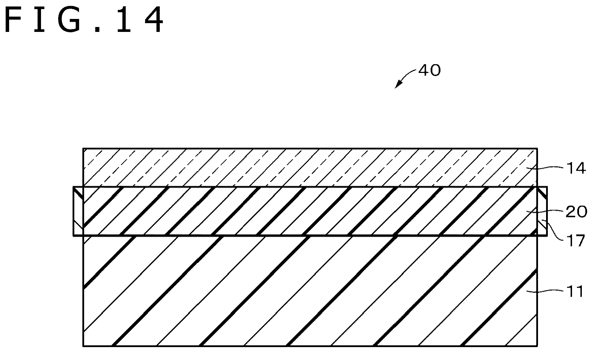

   FIG. 14 is a cross-sectional diagram of a laminate according to a modification of the second embodiment of the present disclosure.
[FIG. 15]

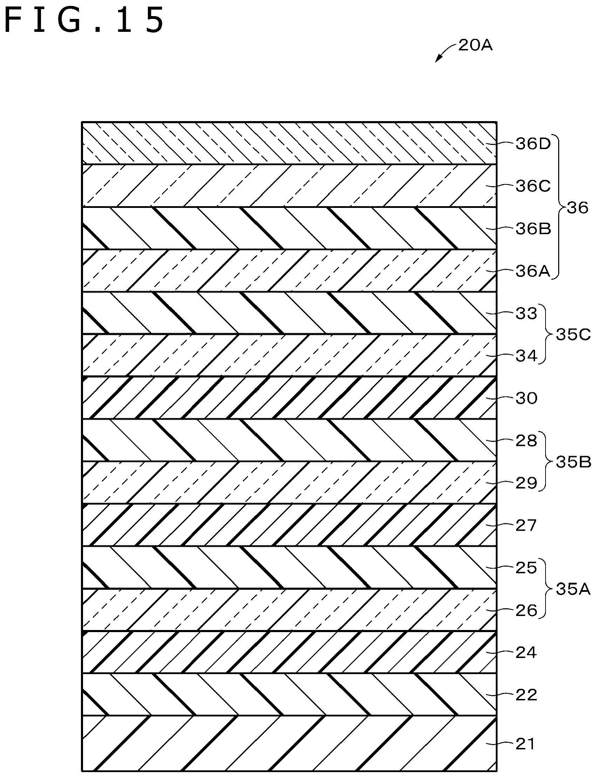

   FIG. 15 is a cross-sectional diagram of a recording medium.
[FIG. 16]

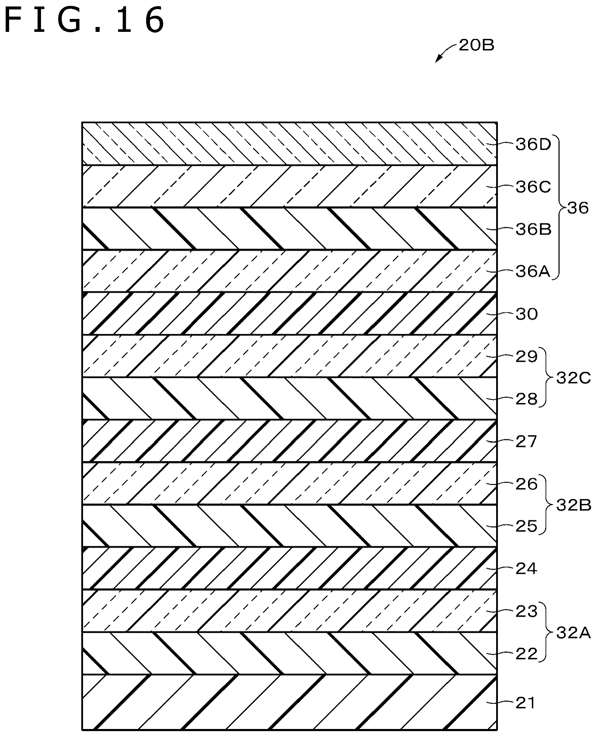

   FIG. 16 is a cross-sectional diagram of a recording medium.
[FIG. 17]

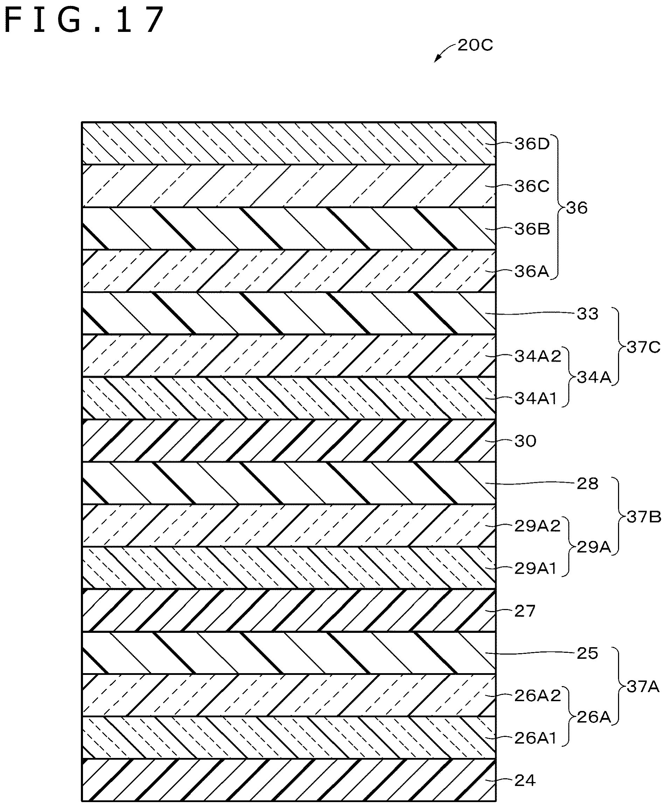

   FIG. 17 is a cross-sectional diagram of a recording medium.
[FIG. 18]

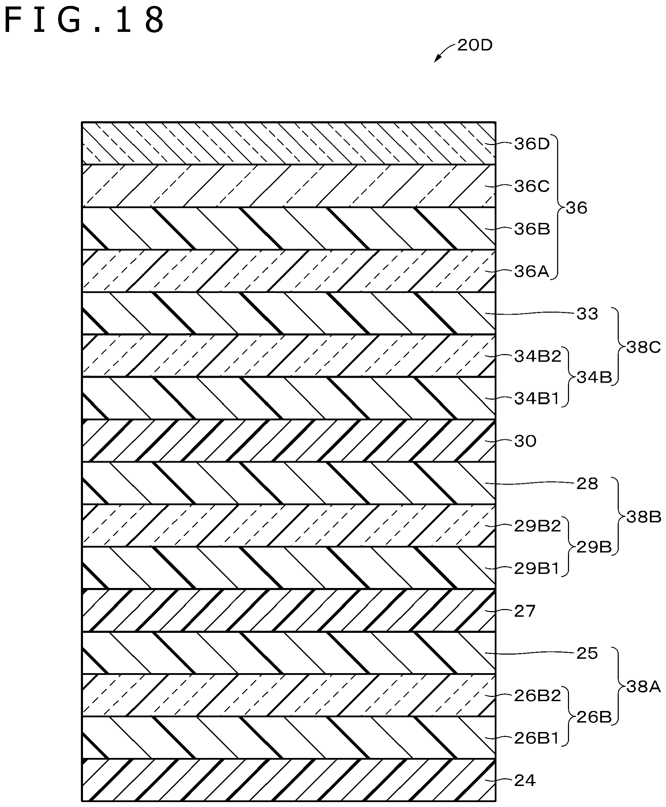

   FIG. 18 is a cross-sectional diagram of a recording medium.
[FIG. 19]

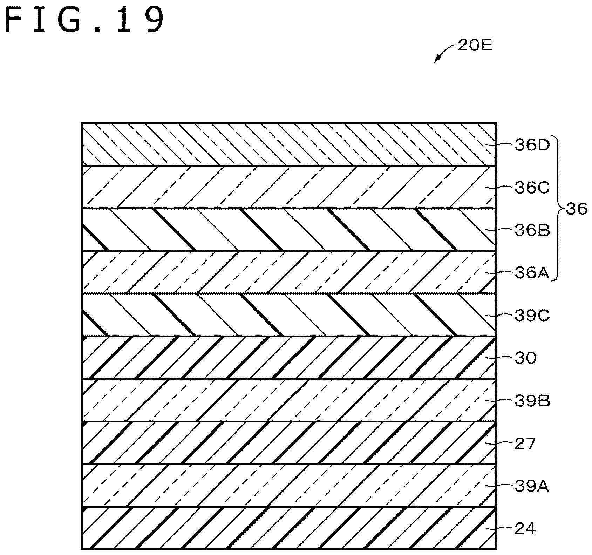

   FIG. 19 is a cross-sectional diagram of a recording medium.
[FIG. 20]

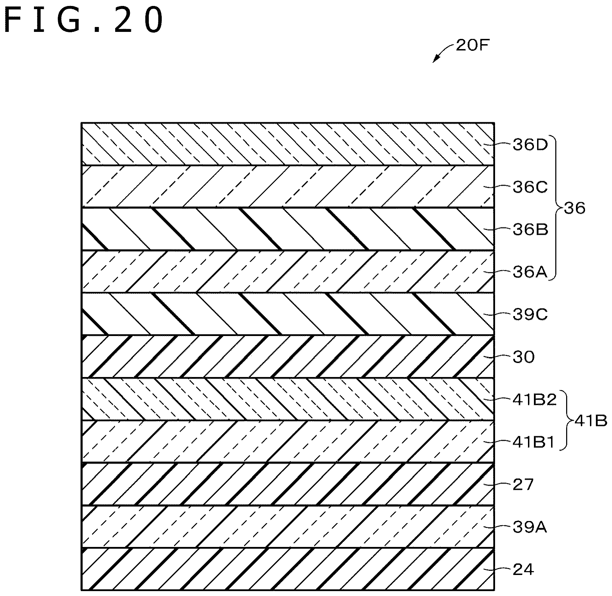

   FIG. 20 is a cross-sectional diagram of a recording medium.
[FIG. 21]

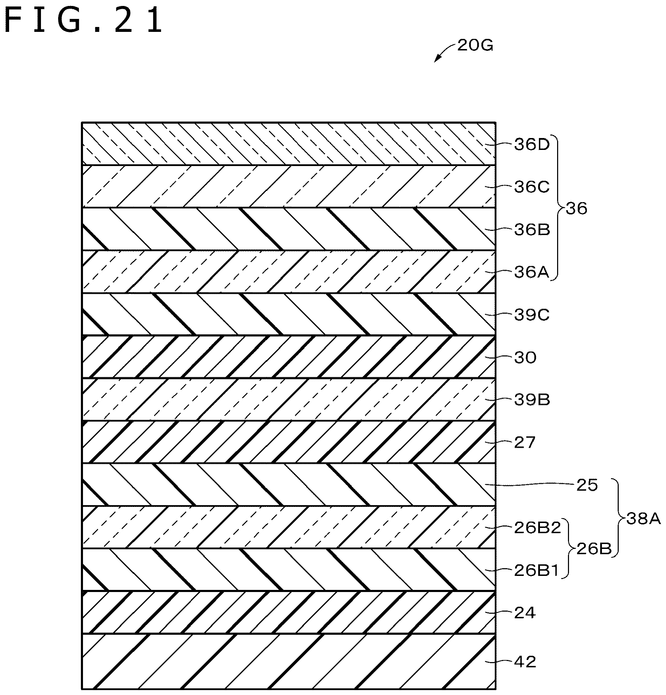

   FIG. 21 is a cross-sectional diagram of a recording medium.
[FIG. 22]

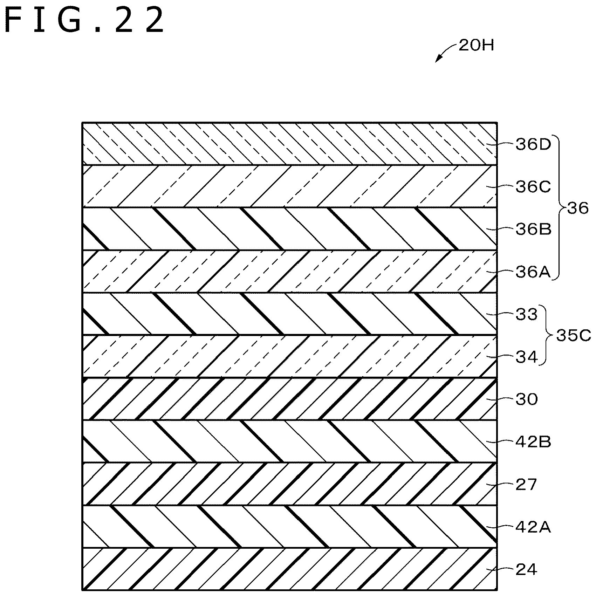

   FIG. 22 is a cross-sectional diagram of a recording medium.
[FIG. 23]

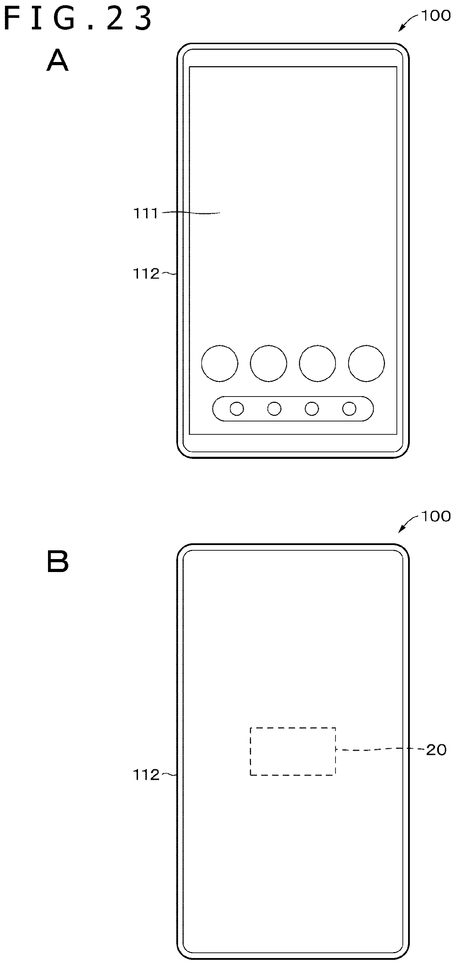

   FIG. 23A is a plan diagram of a front surface of a smartphone. FIG. 23B is a plan diagram of a back surface of the smartphone.
[FIG. 24]

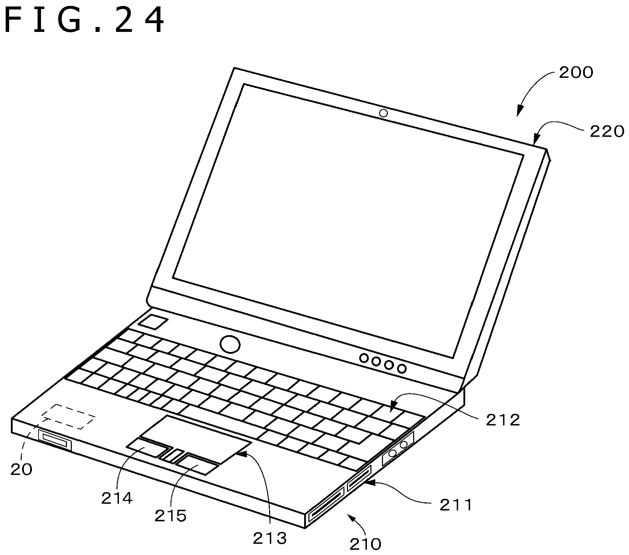

   FIG. 24 is a perspective diagram of a laptop personal computer.
[FIG. 25]

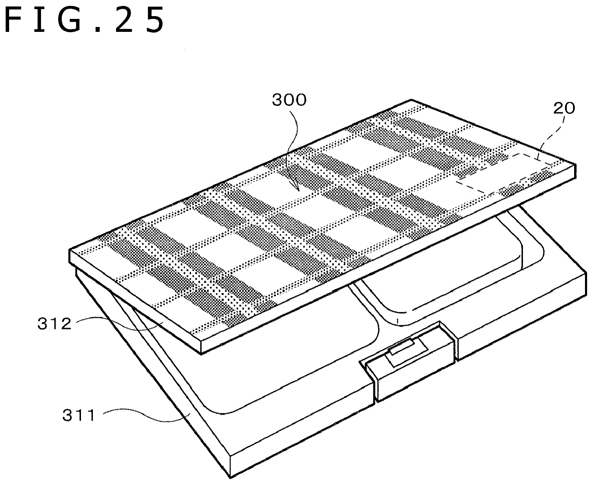

   FIG. 25 is a perspective diagram of a cosmetic container.
[FIG. 26]

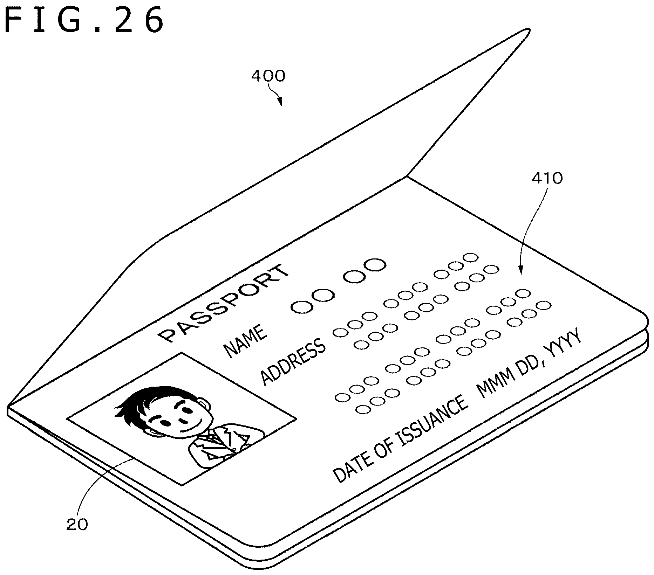

   FIG. 26 is a perspective diagram of a booklet.
[FIG. 27]

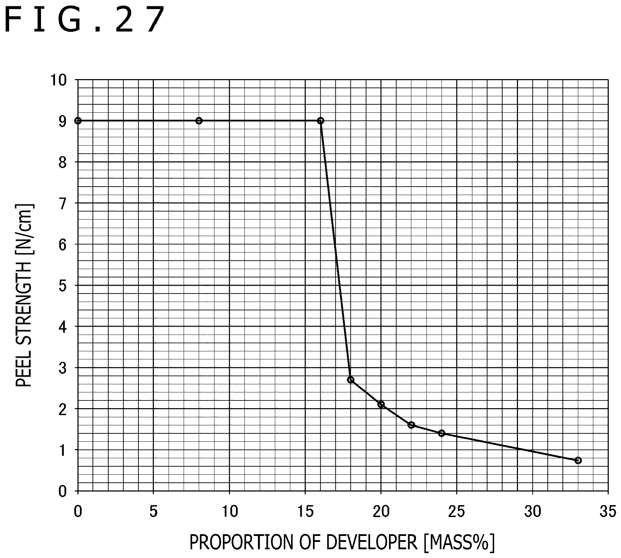

   FIG. 27 is a graph illustrating a measurement result of peel strength of a sample.
[FIG. 28]

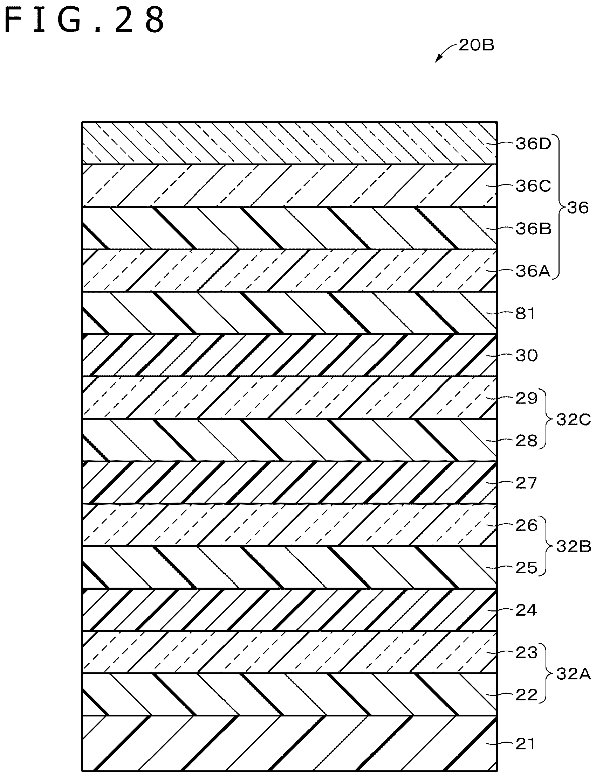

   FIG. 28 is a cross-sectional diagram of a recording medium.

### [Description of Embodiments]

Embodiments according to the present disclosure will be described in the following order. Note that identical or corresponding parts are given identical reference signs in all the figures associated with the following embodiments.
1 First Embodiment (example of laminate)
   1.1 Configuration of laminate
   1.2 Configuration of recording medium
   1.3 Manufacturing method of laminate
   1.4 Recording method of laminate
   1.5 Operation and effect
2 Second Embodiment (example of laminate)
   2.1 Configuration of laminate
   2.2 Manufacturing method of laminate
   2.3 Operation and effect
3 Modifications
4 Reference examples and practical examples

### <1 First embodiment>

### [1.1 Configuration of laminate]

FIG. 1 is a perspective diagram of a laminate 10 according to a first embodiment of the present disclosure. FIG. 2 is a cross-sectional diagram taken along a line II-II in FIG. 1. The laminate 10 includes a base material 11, an adhesive layer 12, a recording medium 20, an adhesive layer 13, and an overlay layer 14 in this order. The laminate 10 may be a security card, a financial settlement card (e.g., credit card, cash card, etc.), an ID card (e.g., staff ID card, membership card, student ID card, etc.), a personal transaction card (e.g., prepaid card, point card, etc.), or other cards (hereinafter referred to as a "security card or the like").

### (Base material)

The base material 11 is a support body for supporting the recording medium 20. The base material 11 may be a card. The base material 11 may have a color such as white. A pattern, a picture, a photograph, a character, a combination of two or more of these, or the like (hereinafter referred to as a "pattern or the like") may be printed on one main surface of the base material 11 on a side where the recording medium 20 and others are provided.

For example, the base material 11 contains plastic. The base material 11 may contain at least one type selected from a set including a colorant, an antistatic agent, a flame retardant, a surface modifier, and the like, as necessary.

For example, the plastic contains at least one type selected from a set including ester resin, amide resin, olefin resin, vinyl resin, acryl resin, imide resin, styrene resin, engineering plastic, and the like. In a case where the base material 11 contains two or more types of resin, these two or more types of resin may be mixed, copolymerized, or laminated.

For example, the ester resin includes at least one type selected from a set including polyethylene terephthalate (PET), polybutylene terephthalate (PBT), polyethylene naphthalate (PEN), polyethylene terephthalate-isophthalate copolymer, terephthalic acid-cyclohexanedimethanol-ethylene glycol copolymer, and the like. For example, the amide resin includes at least one type selected from a set including nylon 6, nylon 66, nylon 610, and the like. For example, the olefin resin includes at least one type selected from a set including polyethylene (PE), polypropylene (PP), polymethylpentene (PMP), and the like. For example, the vinyl resin includes polyvinyl chloride (PVC).

For example, the acryl resin includes at least one type selected from a set including polyacrylate, polymethacrylate, polymethyl methacrylate (PMMA), and the like. For example, the imide resin includes at least one type selected from a set including polyimide (PI), polyamide imide (PAI), polyether imide (PEI), and the like. For example, the styrene resin includes at least one type selected from a set including polystyrene (PS), high-impact polystyrene, acrylonitrile-styrene resin (AS resin), acrylonitrile-butadiene-styrene resin (ABS resin), and the like. For example, the engineering plastic includes at least one type selected from a set including polycarbonate (PC), polyarylate (PAR), polysulfone (PSF), polyether sulfone (PES), polyphenylene ether (PPE), polyphenylene sulfide (PPS), polyetherketone (PEK), polyether-etherketone (PEEK), polyphenylene oxide (PPO), polyether sulfite, and the like.

### (Recording medium)

The recording medium 20 is configured to be able to change a coloration state in response to an external stimulus. For example, a pattern or the like is recordable on the recording medium 20 according to this coloration state change. The external stimulus is laser light. It is preferable that the coloration state change be an irreversible change in view of improvement of anti-counterfeiting. Specifically, it is preferable that the recording medium 20 have a write-once system which allows writing of a pattern or the like only once.

The recording medium 20 is provided on one main surface of the base material 11. The adhesive layer 12 is sandwiched between the base material 11 and the recording medium 20. The recording medium 20 may have a film shape. The recording medium 20 is substantially identical to the one main surface of the base material 11 in shape and is substantially identical to the one main surface of the base material 11 in size.

### (Overlay layer)

The overlay layer 14 is provided on the recording medium 20 to cover the recording medium 20. The adhesive layer 13 is sandwiched between the recording medium 20 and the overlay layer 14. The overlay layer 14 protects the components inside the laminate 10 (i.e., recording medium 20) to maintain mechanical reliability of the laminate 10.

The overlay layer 14 has a film shape. The overlay layer 14 is transparent. The overlay layer 14 contains plastic. Examples of the plastic can include materials similar to those of the base material 11. A pattern or the like may be printed on at least one of main surfaces of the overlay layer 14.

### (Adhesive layer)

The adhesive layer 12 is provided between the base material 11 and the recording medium 20 to bond the base material 11 and the recording medium 20 together. The adhesive layer 13 is provided between the recording medium 20 and the overlay layer 14 to bond the recording medium 20 and the overlay layer 14 together. Each of the adhesive layers 12 and 13 is transparent. Each of the adhesive layers 12 and 13 contains a thermal adhesive. The thermal adhesive contains thermosetting resin. For example, the thermosetting resin includes at least one type selected from a set including epoxy resin, urethane resin, and the like. It is preferable that the thermal adhesive have a hardening temperature in a temperature range of 100°C to 120°C in view of reduction of damage to the recording medium 20.

### [1.2 Configuration of recording medium]

FIG. 3 is a cross-sectional diagram of the recording medium 20. The recording medium 20 includes a base material 21, an intermediate layer 32A, a coloring layer 24, an intermediate layer 32B, a coloring layer 27, an intermediate layer 32C, and a coloring layer 30 in this order. More specifically, the recording medium 20 includes the base material 21, a binder layer 22, a diffusion reduction layer 23, the coloring layer 24, a binder layer 25, a diffusion reduction layer 26, the coloring layer 27, a binder layer 28, a diffusion reduction layer 29, and the coloring layer 30 in this order. As depicted in FIG. 3, the recording medium 20 may further include a protection layer 31 on the coloring layer 30. As depicted in FIG. 4, the recording medium 20 may further include an intermediate layer 32D between the coloring layer 30 and the protection layer 31. More specifically, as depicted in FIG. 4, the recording medium 20 may further include a binder layer 33 and a diffusion reduction layer 34 between the coloring layer 30 and the protection layer 31. The base material 21 is located on the adhesive layer 12 side, while the protection layer 31 is located on the adhesive layer 13 side.

### (Base material)

The base material 21 is a support body for supporting the coloring layers 24, 27, and 30 and others. It is preferable that the base material 11 contain a material having excellent heat resistance and excellent size stability in a planar direction. The base material 21 may have either transparency or non-transparency to light. For example, the base material 21 may be either a substrate having rigidity, such as a wafer, or thin-layer glass, a film, paper, or the like having flexibility. When the base material 21 is a flexible substrate, the flexible (bendable) recording medium 20 is offerable.

For example, the base material 21 may have a constituent material such as an inorganic material, a metal material, or plastic. For example, the inorganic material contains at least one type selected from a set including silicon (Si), silicon oxide (SiOₓ), silicon nitride (SiNₓ), aluminum oxide (AlOₓ), and the like. Silicon oxide includes glass, spin-on-glass (SOG), and the like. For example, the metal material contains at least one type selected from a set including aluminum (Al), nickel (Ni), stainless steel, and the like. Examples of the plastic can include materials similar to those of the base material 11.

Note that a reflection layer (not depicted) may be provided on at least one of main surfaces of the base material 21, or the base material 21 itself may function as a reflection layer as well. Such a configuration of the base material 21 achieves clearer color display.

### (Intermediate layer)

The intermediate layer 32A is provided between the base material 21 and the coloring layer 24. The intermediate layer 32A is capable of bonding the base material 21 and the coloring layer 24 together. The intermediate layer 32A may further achieve thermal insulation between the base material 21 and the coloring layer 24 and diffusion reduction of a constituent material between the base material 21 and the coloring layer 24. The intermediate layer 32A includes the binder layer 22 and the diffusion reduction layer 23. The binder layer 22 is adjacent to the base material 21, while the diffusion reduction layer 23 is adjacent to the coloring layer 24.

The intermediate layer 32B is provided between the coloring layer 24 and the coloring layer 27. The intermediate layer 32B is capable of bonding the coloring layer 24 and the coloring layer 27 together. The intermediate layer 32B may further achieve thermal insulation between the coloring layer 24 and the coloring layer 27 and diffusion reduction of a constituent material between the coloring layer 24 and the coloring layer 27. The intermediate layer 32B includes the binder layer 25 and the diffusion reduction layer 26.

The intermediate layer 32C is provided between the coloring layer 27 and the coloring layer 30. The intermediate layer 32C is capable of bonding the coloring layer 27 and the coloring layer 30 together. The intermediate layer 32C may further achieve thermal insulation between the coloring layer 27 and the coloring layer 30 and diffusion reduction of a constituent material between the coloring layer 27 and the coloring layer 30. The intermediate layer 32C includes the binder layer 28 and the diffusion reduction layer 29.

The intermediate layer 32D is provided between the coloring layer 30 and the protection layer 31. The intermediate layer 32D is capable of bonding the coloring layer 30 and the protection layer 31 together. The intermediate layer 32D may further achieve thermal insulation between the coloring layer 30 and the protection layer 31 and diffusion reduction of a constituent material between the coloring layer 30 and the protection layer 31. The intermediate layer 32D includes the binder layer 33 and the diffusion reduction layer 34.

### (Coloring layer)

Each of the coloring layers 24, 27, and 30 is configured to be able to change a coloration state in response to an external stimulus such as laser light or heat. Each of the coloring layers 24, 27, and 30 is made with use of a material enabling stable recording and coloration state control. Each of the coloring layers 24, 27, and 30 contains an electron-donative coloring compound, an electron-acceptive developer corresponding to the coloring compound, a matrix polymer (binder), and a photothermal conversion material. Each of the coloring layers 24, 27, and 30 may contain at least one type of additive selected from a set including a sensitizer, an ultraviolet absorber, and the like, for example, as necessary in addition to the materials described above.

The coloring layers 24, 27, and 30 contain coloring compounds having coloring hues different from each other. In other words, the coloring compounds contained in the coloring layers 24, 27, and 30 produce colors different from each other in the coloration state. For example, the coloring compound contained in the coloring layer 24 produces cyan in the coloration state. For example, the coloring compound contained in the coloring layer 27 produces magenta in the coloration state. For example, the coloring compound contained in the coloring layer 30 produces yellow in the coloration state. The photothermal conversion materials contained in the coloring layers 24, 27, and 30 absorb laser light beams in wavelength bands different from each other (e.g., near-infrared laser light beams different from each other) and generate heat.

Each of the coloring layers 24, 27, and 30 has a thickness preferably in a range of 1 to 20 µm, and more preferably in a range of 2 to 15 um. When the thickness is 1 um or larger, each of the coloring layers 24, 27, and 30 can obtain sufficient color density. Meanwhile, when the thickness is 20 um or smaller, each of the coloring layers 24, 27, and 30 can reduce an excessive volume of heat utilization. Accordingly, reduction of color producibility deterioration is achievable.

### (Coloring compound)

For example, the coloring compound is a leuco pigment. For example, the leuco pigment may be an existing dye for thermosensitive paper. Specific examples of the leuco pigment include a compound containing an electron-donative group in a molecule as expressed by following Formula (1).

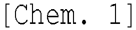

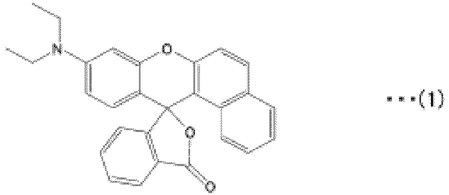

The coloring compound is not particularly limited to a specific compound and may appropriately be selected according to purposes. Specific examples of the coloring compound include, in addition to the compounds presented in above Formula (1), fluoran compound, triphenylmethane phthalide compound, azaphthalide compound, phenothiazine compound, leuco-auramine compound, indolinophthalide compound, and the like. Other examples include 2-anilino-3-methyl-6-diethylaminofluoran, 2-anilino-3-methyl-6-di(n-butylamino)fluoran, 2-anilino-3-methyl-6-(N-n-propyl-N-methylamino)fluoran, 2-anilino-3-methyl-6-(N-isopropyl-N-methylamino)fluoran, 2-anilino-3-methyl-6-(N-isobutyl-N-methylamino)fluoran, 2-anilino-3-methyl-6-(N-n-amyl-N-methylamino)fluoran, 2-anilino-3-methyl-6-(N-sec-butyl-N-methylamino)fluoran, 2-anilino-3-methyl-6-(N-n-amyl-N-ethylamino)fluoran, 2-anilino-3-methyl-6-(N-isoamyl-N-ethylamino)fluoran, 2-anilino-3-methyl-6-(N-n-propyl-N-isopropylamino)fluoran, 2-anilino-3-methyl-6-(N-cyclohexyl-N-methylamino)fluoran, 2-anilino-3-methyl-6-(N-ethyl-p-toluidino)fluoran, 2-anilino-3-methyl-6-(N-methyl-p-toluidino)fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino)fluoran, 2-(2,4-dimethylanilino)-3-methyl-6-diethylaminofluoran, 2-(N-ethyl-p-toluidino)-3-methyl-6-(N-ethylanilino)fluoran, 2-(N-ethyl-p-toluidino)-3-methyl-6-(N-propyl-p-toluidino)fluoran, 2-anilino-6-(N-n-hexyl-N-ethylamino)fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino)fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino)fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino)fluoran, 3-(1-ethyl-2-methylindole-3-yl)-3-(2-ethoxy-4-diethylaminophenyl)-4-azaphthalide, 3-(1-ethyl-2-methylindole-3-yl)-3-(2-ethoxy-4-diethylaminophenyl)-7-azaphthalide, 3-(1-octyl-2-methylindole-3-yl)-3-(2-ethoxy-4-diethylaminophenyl)-4-azaphthalide, 3-(1-ethyl-2-methylindole-3-yl)-3-(2-methyl-4-diethylaminophenyl)-4-azaphthalide, 3-(1-ethyl-2-methylindole-3-yl)-3-(2-methyl-4-diethylaminophenyl)-7-azaphthalide, 3-(1-ethyl-2-methylindole-3-yl)-3-(4-diethylaminophenyl)-4-azaphthalide, 3-(1-ethyl-2-methylindole-3-yl)-3-(4-N-n-amyl-N-methylaminophenyl)-4-azaphthalide, 3-(1-methyl-2-methylindole-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino)fluoran, 2-benzylamino-6-(N-ethyl-p-toluidino)fluoran, 2-benzylamino-6-(N-methyl-2,4-dimethylanilino)fluoran, 2-benzylamino-6-(N-ethyl-2,4-dimethylanilino)fluoran, 2-benzylamino-6-(N-methyl-p-toluidino)fluoran, 2-benzylamino-6-(N-ethyl-p-toluidino)fluoran, 2-(di-p-methylbenzylamino)-6-(N-ethyl-p-toluidino)fluoran, 2-(α-phenylethylamino)-6-(N-ethyl-p-toluidino)fluoran, 2-methylamino-6-(N-methylanilino)fluoran, 2-methylamino-6-(N-ethylanilino)fluoran, 2-methylamino-6-(N-propylanilino)fluoran, 2-ethylamino-6-(N-methyl-p-toluidino)fluoran, 2-methylamino-6-(N-methyl-2,4-dimethylanilino)fluoran, 2-ethylamino-6-(N-ethyl-2,4-dimethylanilino)fluoran, 2-dimethylamino-6-(N-methylanilino)fluoran, 2-dimethylamino-6-(N-ethylanilino)fluoran, 2-diethylamino-6-(N-methyl-p-toluidino)fluoran, 2-diethylamino-6-(N-ethyl-p-toluidino)fluoran, 2-dipropylamino-6-(N-methylanilino)fluoran, 2-dipropylamino-6-(N-ethylanilino)fluoran, 2-amino-6-(N-methylanilino)fluoran, 2-amino-6-(N-etylanilino)fluoran, 2-amino-6-(N-propylanilino)fluoran, 2-amino-6-(N-methyl-p-toluidino)fluoran, 2-amino-6-(N-ethyl-p-toluidino)fluoran, 2-amino-6-(N-propyl-p-toluidino)fluoran, 2-amino-6-(N-methyl-p-ethylanilino)fluoran, 2-amino-6-(N-ethyl-p-ethylanilino)fluoran, 2-amino-6-(N-propyl-p-ethylanilino)fluoran, 2-amino-6-(N-methyl-2,4-dimethylanilino)fluoran, 2-amino-6-(N-ethyl-2,4-dimethylanilino)fluoran, 2-amino-6-(N-propyl-2,4-dimethylanilino)fluoran, 2-amino-6-(N-methyl-p-chloroanilino)fluoran, 2-amino-6-(N-ethyl-p-chloroanilino)fluoran, 2-amino-6-(N-propyl-p-chloroanilino)fluoran, 1,2-benzo-6-(N-ethyl-N-isoamylamino)fluoran, 1,2-benzo-6-dibutylaminofluoran, 1,2-benzo-6-(N-methyl-N-cyclohexylamino)fluoran, 1,2-benzo-6-(N-ethyl-N-toluidino)fluoran, and the like. Each of the coloring layers 24, 27, and 30 may contain only one type selected from the coloring compounds described above or may contain two or more types of these.

### (Developer)

For example, the developer is an agent for producing a color from a colorless coloring compound. The developer may have a particle shape. For example, the developer may be at least one type selected from a set including a phenol derivative, a salicylic acid derivative, a urea derivative, and the like. Specifically, for example, the developer may be a hydroxy benzoic acid type compound expressed by following Formula (2) and containing an electron-donative group in a molecule. The hydroxy benzoic acid type compound may be a bis (hydroxy benzoic acid) type compound. 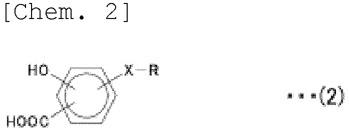 (where X is any of -NHCO-, -CONH-, -NHCONH-, -CONHCO-, - NHNHCO-, -CONHNH-, -CONHNHCO-, -NHCOCONH-, -NHCONHCO-, - CONHCONH-, -NHNHCONH-, -NHCONHNH-, -CONHNHCONH-, - NHCONHNHCO-, and -CONHNHCONH-. R is a linear-chain-shaped hydrocarbon group having 25 to 34 carbons.)

Bonding positions of a hydroxy group (-OH), a carboxyl group (-COOH), and a -X-R group in Formula (2) are not limited to any specific positions. For example, the hydroxy benzoic acid type compound may have a structure which has the hydroxy group and the carboxyl group bonded with each other at an ortho position of benzene, i.e., a salicylic acid skeleton.

### (Matrix polymer)

It is preferable that the matrix polymer (matrix resin) function as a binder. It is preferable that the matrix polymer have a coloring compound, a developer, and a photothermal conversion material each easily dispersing uniformly. For example, the matrix polymer may be at least one type selected from a set including thermosetting resin and thermoplastic resin. Specifically, for example, the matrix polymer is a polymer of one type selected from a set including polyvinyl chloride resin, polyvinyl acetate resin, vinyl chloride-vinyl acetate copolymer resin, ethyl cellulose resin, polystyrene resin, styrene copolymer resin, phenoxy-resin resin, polyester resin, aromatic polyester resin, polyurethane resin, polycarbonate resin, polyacrylic acid ester resin, polymethacrylic acid ester resin, acrylic acid copolymer resin, maleic acid polymer resin, polyvinyl alcohol resin, modified polyvinyl alcohol resin, hydroxy ethyl cellulose resin, carboxy methyl cellulose resin, starch, and the like.

It is preferable that the matrix polymer contain polycarbonate resin. When the matrix polymer contains polycarbonate resin, light resistance of the skin of the recording medium 20 improves. The polycarbonate resin herein is resin which has a carbonate group (-O-(C=O)-O-) as a structure unit at least for the main chain. Accordingly, the polycarbonate resin may have structure units other than a carbonate group for the main chain.

A proportion of the developer to a total amount of the developer and the matrix resin is lower than 18 mass%, for example, preferably 17 mass% or lower, or 16 mass% or lower. When the proportion of the developer is lower than 18 mass%, adhesiveness between the coloring layers 24, 27, and 30 and layers adjacent to the coloring layers 24, 27, and 30 (particularly diffusion reduction layers 23, 26, 29, and 34 (see FIG. 15)) improves.

The proportion of the developer to the total amount of the developer and the matrix resin is measured in the following manner. Compositions of the developer and the matrix polymer of each of the coloring layers 24, 27, and 30 are measured by mapping with use of a Fourier transform infrared spectrophotometer (microscopic FTIR). Alternatively, weights of the developer and the matrix polymer are measured with dissolution by respective appropriate organic solvents on the basis of a difference in dissolubility between the developer and the matrix polymer, to thereby carry out calculation.

It is preferable that a content of the matrix polymer in each of the coloring layers 24, 27, and 30 be 84 mass% or higher in view of improvement of the adhesiveness between the coloring layers 24, 27, and 30 and the layers adjacent to the coloring layers 24, 27, and 30 (particularly, diffusion reduction layers 23, 26, 29, and 34 (see FIG. 15)). The content of the matrix polymer preferably is in a range of 50 to 70 mass%, and more preferably is in a range of 58 to 65 mass%, in view of reduction of deterioration of coloring producibility of the coloring layers 24, 27, and 30. In a case where the content of the matrix polymer is in the range of 50 to 70 mass%, it is preferable that the layers adjacent to the coloring layers 24, 27, and 30 be selected so as to achieve suitable adhesiveness.

The content of the matrix polymer contained in each of the coloring layers 24, 27, and 30 is measured in the following manner. Compositions of the developer and the matrix polymer of each of the coloring layers 24, 27, and 30 are measured by mapping with use of a Fourier transform infrared spectrophotometer (microscopic FTIR). Alternatively, weights of the developer and the matrix polymer are measured with dissolution by respective appropriate organic solvents on the basis of a difference in dissolubility between the developer and the matrix polymer, to thereby carry out calculation.

### (Photothermal conversion material)

For example, the photothermal conversion material is a material which absorbs light in a predetermined wavelength range in a near infrared band and generates heat. For example, it is preferable that the photothermal conversion material be a near infrared light absorbing pigment which has an absorption peak in a wavelength range of 700 to 2000 nm and which absorbs substantially no light in a visible band. Specifically, for example, the photothermal conversion material is at least one type selected from a set including a compound having a phthalocyanine skeleton (phthalocyanine dye), a compound having a squarylium skeleton (squarylium dye), an inorganic compound, and the like. For example, the inorganic compound is at least one type selected from a set including a metal complex such as a dithio complex, diimonium salt, ammonium salt, an inorganic compound, and the like. For example, the inorganic compound is at least one type selected from a set including metallic oxide such as graphite, carbon black, metal powder particles, tricobalt tetroxide, iron oxide, chromium oxide, copper oxide, titanium black, and ITO (Indium Tin Oxide), metallic nitride such as niobium nitride, metallic carbide such as tantalum carbide, metallic sulfide, various magnetic powders, and the like. Alternatively, a compound having a cyanine skeleton (cyanine dye) having excellent light resistance and heat resistance may be adopted. Note that the excellent light resistance herein refers to such a property that no decomposition is caused by irradiation such as fluorescence light irradiation under a use environment. For example, the excellent heat resistance is such a property that a change of 20% or more of a maximum absorption peak value of an absorption spectrum is not caused when the compound is formed together with a polymer material, for example, and stored at 150°C for 30 minutes, for example. Examples of the compound having such a cyanine skeleton include a compound containing, in a molecule, at least either a counter ion of any of SbF₆, PF₆, BF₄, ClO₄, CF₃SO₃, and (CF₃SO₃)₂N or a methine chain containing a five-membered ring or a six-membered ring. Note that it is preferable that the compound that has the cyanine skeleton and that is included in the recording medium 20 according to the first embodiment have both any of the counter ions described above and a cyclic structure such as a five-membered ring and a six-membered ring in a methine chain. However, sufficient light resistance and heat resistance are reliably obtained if at least either the counter ion or the cyclic structure is provided.

Note that, for example, it is preferable that such a material which has a narrow light absorption band and which produces no overlap of the light absorption band between the coloring layers 24, 27, and 30 in the wavelength range of 700 to 2000 nm be selected as the photothermal conversion material. In this case, selective color production from the desired layer of the coloring layers 24, 27, and 30 is achievable.

### (Diffusion reduction layer)

The diffusion reduction layer 23 is provided between the base material 21 and the coloring layer 24 and is capable of reducing diffusion of a substance (e.g., coloring compound etc.) between the base material 21 and the coloring layer 24 and also achieving thermal insulation between the base material 21 and the coloring layer 24. The diffusion reduction layer 26 is provided between the coloring layer 24 and the coloring layer 27 and is capable of reducing diffusion of a substance (e.g., coloring compound etc.) between the coloring layer 24 and the coloring layer 27 and also achieving thermal insulation between the coloring layer 24 and the coloring layer 27. The diffusion reduction layer 29 is provided between the coloring layer 27 and the coloring layer 30 and is capable of reducing diffusion of a substance (e.g., coloring compound etc.) between the coloring layer 27 and the coloring layer 30 and also achieving thermal insulation between the coloring layer 27 and the coloring layer 30. The diffusion reduction layer 34 is provided between the coloring layer 30 and the protection layer 31 and is capable of reducing diffusion of a substance (e.g., coloring compound etc.) between the coloring layer 30 and the protection layer 31 and also achieving thermal insulation between the coloring layer 30 and the protection layer 31.

For example, each of the diffusion reduction layers 23, 26, 29, and 34 is a layer containing amorphous resin or crystalline resin. For example, each of the diffusion reduction layers 23, 26, 29, and 34 contains a typical light-transmissive polymer material. Examples of the specific material of each of the diffusion reduction layers 23, 27, 29, and 34 include at least one type of material selected from a set including acryl resin, polyvinyl chloride resin, polyvinyl acetate resin, vinyl chloride-vinyl acetate copolymer resin, ethyl cellulose resin, polystyrene resin, styrene copolymer resin, phenoxy-resin resin, polyester resin, aromatic polyester resin, polyurethane resin, polycarbonate resin, polyacrylic acid ester resin, polymethacrylic acid ester resin, acrylic acid copolymer resin, maleic acid polymer resin, polyvinyl alcohol resin, modified polyvinyl alcohol resin, hydroxy ethyl cellulose resin, carboxy methyl cellulose resin, starch, and the like. Note that each of the diffusion reduction layers 23, 26, 29, and 34 may contain various additives such as an ultraviolet absorber, for example. Each of the diffusion reduction layers 23, 26, 29, and 34 may be a film which contains a light-transmissive polymer material.

It is preferable that each of the diffusion reduction layers 23, 26, 29, and 34 be a UV-curable resin layer or a thermosetting resin layer. The UV-curable resin layer contains a UV-curable resin composition solidified by polymerization reaction. More specifically, for example, the UV-curable resin layer contains a polymer including a polymerizable compound, and a polymerization initiator having generated active species and caused a structure change in response to irradiation with external energy (ultraviolet light). For example, the UV-curable resin composition contains at least one type selected from a set including a radical polymerization type UV-curable resin composition, a cation polymerization type UV-curable resin composition, and the like. The UV-curable resin composition may contain at least one type selected from a set including a sensitizer, a filler, a stabilizer, a leveling agent, an antifoam agent, a viscosity modifier, and the like as necessary. The UV-curable resin composition may be a UV-curable resin composition for hard coating. The UV-curable resin composition may be an acrylic UV-curable resin composition.

The UV-curable resin composition is classified into two types, i.e., radical polymerization and cation polymerization, on the basis of a reaction mechanism of the composition. In the radical polymerization, radicals are generated from the initiator through UV absorption, and acrylate resin or acrylate monomers each having an acryloyl group in a molecule cause radical polymerization. A special functional group such as an acryloyl group is detectable by FT-IR. Alternatively, a radical polymerization agent is detectable by sublimation with use of GCMS. Generally, the radical polymerization agent is excessively loaded so as to develop polymerization with sufficient rapidity. In the cation polymerization, the initiator generates acids through UV absorption, and vinyl monomers, cyclic ether, or the like starts cation polymerization. A special functional group such as a vinyl group, an ether group, and an epoxy group is detectable by FT-IR. In view of costs and high selectivity of monomers, selection of the radical polymerization is more preferable. However, the cation polymerization type may also be selected.

The thermosetting resin layer contains a thermosetting resin composition solidified by polymerization reaction. In the case of the thermosetting resin composition, too, an epoxy group is detectable with use of FT-IR. The UV-curable type achieves curing of compositions more rapidly and uniformly, and therefore, a degree of cross-linkage increases. Accordingly, the UV-curable type is more advantageous for film coating. The degree of cross-linkage can be determined by dissolving a polymer portion and calculating a monomer ratio of an extracted component.

Each of the diffusion reduction layers 23, 26, 29, and 34 may contain a light-transmissive inorganic material. For example, when porous silica, alumina, titania, carbon, or a complex of these or the like is adopted, heat conductivity decreases. These materials are therefore advantageous in view of preferable thermal insulation effects. For example, the diffusion reduction layers 23, 26, 29, and 34 can be formed by a sol-gel method.

Each of the diffusion reduction layers 23, 26, 29, and 34 has a thickness preferably in a range of 3 to 100 µm, and more preferably in a range of 5 to 50 um. When the thickness is 3 um or larger, each of the diffusion reduction layers 23, 26, 29, and 34 obtains sufficient diffusion reduction and thermal insulation effects. Meanwhile, when the thickness is 100 um or smaller, each of the diffusion reduction layers 23, 26, 29, and 34 is capable of reducing lowering of light transmissivity. Moreover, this configuration can reduce deterioration of bending resistance of the recording medium 20 and therefore lower a possibility of defects such as generation of a crack.

The diffusion reduction layer 26 is capable of reducing diffusion of a substance (e.g., coloring compound) between the adjacent coloring layer 24 and coloring layer 27 during heating of the recording medium 20. The diffusion reduction layer 29 is capable of reducing diffusion of a substance (e.g., coloring compound) between the adjacent coloring layer 27 and coloring layer 30 during heating of the recording medium 20. The diffusion reduction layer 23 is capable of reducing diffusion of a substance (e.g., coloring compound) between the adjacent base material 21 and coloring layer 24 during heating of the recording medium 20. The diffusion reduction layer 34 is capable of reducing diffusion of a substance (e.g., coloring compound) between the adjacent coloring layer 30 and protection layer 31 during heating of the recording medium 20. A heating temperature of the recording medium 20 preferably is in a range of 120°C to 200°C, or 160°C to 200°C. The heating temperature of the recording medium 20 herein is a temperature measured at the surface of the laminate 10 or the recording medium 20.

Diffusion of the coloring compound (e.g., leuco pigment) is measurable with use of TOF-SIMS. A molecular weight of the coloring compound is determined on the basis of each portion of the coloring layers 24, 27, and 30 with use of LC-MS or the like. Thereafter, a portion corresponding to the measurement is extracted, and a spectrum corresponding to the molecular weight of the coloring compound is extracted while the recording medium 20 is being dug in a film thickness direction by sputtering. Thereafter, changes in fragment intensity of molecules of the coloring compound are compared before and after heating in comparison with the coloring layers 24, 27, and 30.

Pencil hardness of each of the surfaces of the diffusion reduction layers 23, 26, 29, and 34 preferably is 2B or higher, and more preferably is H or higher. When pencil hardness of each of the surfaces of the diffusion reduction layers 23, 26, 29, and 34 is 2B or higher, each of the diffusion reduction layers 23, 26, 29, and 34 has high crosslink density. In this case, precision increases, and further reduction of substance diffusion via the intermediate layers 32A, 32B, 32C, and 32D is achievable. For example, in a case where the pencil hardness of each of the surfaces of the diffusion reduction layers 26 and 29 is 2B or higher, further reduction of diffusion of the coloring compound via the intermediate layers 32B, 32C, and 32D is achievable. Accordingly, further reduction of hue changes of the coloring layers 24, 27, and 30 produced by long-term storage or the like is achievable. It is preferable that each of the diffusion reduction layers 23, 26, 29, and 34 having the above pencil hardness be a UV-curable resin layer or a thermosetting resin layer.

The pencil hardness of the surface of the diffusion reduction layer 23 is measured in the following manner. Initially, the laminate 10 is discomposed to expose the surface of the diffusion reduction layer 23. Subsequently, the pencil hardness of the surface of the diffusion reduction layer 23 is measured in conformity to JIS K5600-5-4. This measurement is carried out in an atmosphere of a standard state at a temperature of 23°C ± 1°C and relative humidity of 50% ± 5%. The pencil hardness of each of the surfaces of the diffusion reduction layers 26, 29, and 34 is measured by procedures similar to the procedure for measuring the pencil hardness of the surface of the diffusion reduction layer 23.

It is preferable that each of the diffusion reduction layers 23, 26, 29, and 34 be a resin layer having no tackiness. This configuration can improve the substance diffusion reduction effect of the diffusion reduction layers 23, 26, 29, and 34.

A Young's modulus of each of the diffusion reduction layers 23, 26, 29, and 34 preferably is 10 MPa or higher, more preferably is 100 MPa or higher, and further preferably is 2000 MPa or higher in an atmosphere of a standard state at a temperature of 23°C ± 1°C and relative humidity of 50% ± 5%. When the Young's modulus of each of the diffusion reduction layers 23, 26, 29, and 34 is 10 MPa or higher, the substance diffusion reduction effect of the diffusion reduction layers 23, 26, 29, and 34 can improve.

The Young's modulus of each of the diffusion reduction layers 23, 26, 29, and 34 is measured in the following manner. The Young's modulus is calculated using a tensile tester on the basis of a ratio of tensile stress within tensile proportional limit of a material to distortion corresponding to this tensile stress.

It is preferable that each of the diffusion reduction layers 23, 26, 29, and 34 be a resin layer having a glass transition temperature of 130°C or higher. When the glass transition temperature of each of the diffusion reduction layers 23, 26, 29, and 34 is 130°C or higher, the substance diffusion reduction effect of the diffusion reduction layers 23, 26, 29, and 34 can improve. In view of improvement of the substance diffusion reduction effect, each of the diffusion reduction layers 23, 26, 29, and 34 may be a resin layer which is solid at a room temperature and which does not have a phase transition point in a range of 25°C to 300°C.

The glass transition temperature of each of the diffusion reduction layers 23, 26, 29, and 34 is measured in the following manner. The glass transition temperature of each of the diffusion reduction layers 23, 26, 29, and 34 is measured by acquiring a peak shift in a heat history with use of thermal gravity-differential thermal analysis (TG-DTA).

### (Binder layer)

The binder layer 22 is provided between the base material 21 and the diffusion reduction layer 23 to bond the base material 21 and the diffusion reduction layer 23 together. The binder layer 25 is provided between the coloring layer 24 and the diffusion reduction layer 26 to bond the coloring layer 24 and the diffusion reduction layer 26 together. The binder layer 28 is provided between the coloring layer 27 and the diffusion reduction layer 29 to bond the coloring layer 27 and the diffusion reduction layer 29 together. The binder layer 33 is provided between the coloring layer 30 and the diffusion reduction layer 34 to bond the coloring layer 30 and the diffusion reduction layer 34 together.

Each of the binder layers 22, 25, 28, and 33 contains a binding agent. For example, the binding agent contains at least one type selected from a set including acryl resin, silicone resin, urethane resin, epoxy resin, elastomer material, and the like. Each of the binder layers 22, 25, 28, and 33 may be an optical binder sheet such as an OCA (Optical Clear Adhesive).

### (Protection layer)

The protection layer 31 is a layer for protecting the surface of the recording medium 20 and contain at least one type selected from UV-curable resin and thermosetting resin, for example. It is preferable that the protection layer 31 be a hard coat layer. For example, the protection layer 31 has a thickness in a range of 0.1 to 20 um. The protection layer 31 may have a function of cutting off ultraviolet light entering the coloring layers 24, 27, and 30 in addition to the function of protecting the surface of the recording medium 20A. In this case, the protection layer 31 may include a resin layer and a UV cut layer. Specifically, for example, the protection layer 31 may include a resin layer, a UV cut layer, a binder layer, and a base material in order on one main surface of the coloring layer 30. For example, the resin layer contains at least one type selected from UV-curable resin and thermosetting resin. It is preferable that the resin layer be a hard coat layer.

### (Average peel strength between respective layers)

Average peel strength of interfaces between the respective layers constituting the laminate 10 preferably is 3.5 N/cm or higher, more preferably is 4.0 N/cm or higher, further preferably is 4.5 N/cm or higher, and particularly preferably is 5.0 N/cm or higher. When the average peel strength of the interfaces between the respective layers is 3.5 N/cm or higher, reduction of peeling is achievable for the interfaces between the respective layers constituting the laminate 10. Accordingly, anti-counterfeiting and anti-tampering of the laminate 10 can improve. The layers constituting the laminate 10 herein may include the respective layers constituting the recording medium 20.

Average peel strength of at least one of the interfaces included in the recording medium 20 may preferably be lower than 3.5 N/cm, and more preferably be lower than 3.0 N/cm. The recording medium 20 decomposes by decomposition of the laminate 10. In this case, the recording medium 20 is difficult to extract and use.

In a case where the average peel strength of at least one of the interfaces included in the recording medium 20 is lower than 3.5 N/cm, average peel strength of the interface between the base material 11 and the recording medium 20 and average peel strength of the interface between the recording medium 20 and the overlay layer 14 preferably are 3.5 N/cm or higher, more preferably are 4.0 N/cm or higher, further preferably are 4.5 N/cm or higher, and particularly preferably are 5.0 N/cm or higher. In this case, the recording medium 20 is easily destroyed by decomposition of the laminate 10. Accordingly, the recording medium 20 is difficult to extract and use.

Average peel strength of at least either the interface located between the adjacent coloring layer 24 and coloring layer 27 or the interface located between the adjacent coloring layer 27 and coloring layer 30 in the recording medium 20 may preferably be lower than 3.5 N/cm, and more preferably be lower than 3.0 N/cm. When the average peel strength of the recording medium 20 is lower than 3.5 N/cm, the portion between the coloring layers 24 and 27 or the portion between the coloring layers 27 and 30 in the recording medium 20 decomposes by decomposition of the laminate 10. In this case, the recording medium 20 is difficult to extract and use.

In a case where the average peel strength of at least either the interface located between the adjacent coloring layer 24 and coloring layer 27 or the interface located between the adjacent coloring layer 27 and coloring layer 30 is lower than 3.5 N/cm, the average peel strength of the interface between the base material 11 and the recording medium 20 and the average peel strength of the interface between the recording medium 20 and the overlay layer 14 preferably are 3.5 N/cm or higher, more preferably are 4.0 N/cm or higher, further preferably are 4.5 N/cm or higher, and particularly preferably are 5.0 N/cm or higher. In this case, the recording medium 20 is easily destroyed by decomposition of the laminate 10. Accordingly, the recording medium 20 is difficult to extract and use.

Each average peel strength of the interfaces between the respective layers is obtained by carrying out a 90-degree peeling test. Each average peel strength of the interfaces between the respective layers is measurable by a similar measuring method. Accordingly, only the measuring method of the average peel strength of the interface between the base material 11 and the recording medium 20 will hereinafter be touched upon with reference to FIG. 5.

Initially, a band-shaped portion having a width of 10 mm and a length of 100 mm is cut out from the laminate 10 to produce a test piece 60. The test piece 60 is left in an atmosphere of a standard state at a temperature of 23°C ± 1°C and relative humidity of 50% ± 5% for 24 hours or longer. A laminated portion included in the test piece 60 and located above the interface between the base material 11 and the recording medium 20 will hereinafter be referred to as an adherend 61. Subsequently, a cutout is formed between the base material 11 and the adherend 61 at one end of the test piece 60 in a longitudinal direction with use of a sharp knife such as a cutter, to peel off the adherend 61 in the longitudinal direction by a length of 20 mm as a gripping margin. Thereafter, a surface of the test piece 60 on the base material 11 side is fixed to a test board 71 by a strong binder agent. The binder agent to be selected has sufficiently high binding force, such as strong binding tape "scotch" (registered trademark) manufactured by 3M Company, so as to prevent peeling off of the base material 11 from the test board 71 during measurement of peel strength between the base material 11 and the adherend 61. FIG. 5 depicts an example where a tensile member 62 is provided as a gripping margin. However, in a case where a sufficient stroke is left for clamping the adherend 61 by a clamp device (metal plate) 63, the adherend 61 may be clamped directly without use of the tensile member 62. The tensile member 62 to be selected is a band-shaped film having sufficient strength and neither stretching nor breaking during measurement of peel strength. Moreover, one end portion of the tensile member 62 is bonded to the adherend 61 with sufficiently high binding force so as to prevent peeling from the adherend 61 during measurement of peel strength.

Thereafter, the gripping margin of the tensile member 62 is inserted between a pair of movable rolls 73A and 73B included in a jig 72, and clamped by a length of 10 mm or longer for fixation with use of the clamp device (metal plate) 63 which is a tensile compression tester SV-55C 2H manufactured by IMADA SEISAKUSHO CO., LTD. The movable rolls 73A and 73B constitute fulcrums of peeling during the 90-degree peeling test. Then, the 90-degree peeling test is carried out using the tensile compression tester. A test force [N/cm] and a stroke [mm] are monitored as voltage values on a data logger manufactured by KEYENCE CORPORATION, for example, and are converted into force and stored in a memory as CSV output data. Note that the 90-degree peeling test described above is conducted in a standard state at a temperature of 23°C ± 1°C and relative humidity of 50% ± 5% and at tensile speed of 5 mm/sec. The stroke is set to 50 mm or longer.

The 90-degree peeling test described above is carried out three times in total. The CSV output data until a position at a relative distance of 50 mm from a start point (0 mm) corresponding to a portion where peel strength is stabilized (position where rising of the force becomes gentle) is arithmetically averaged to calculate an average value. In this manner, the average peel strength between the base material 11 and the recording medium 20 (adherend 61) is obtained. However, a point where the peeling force suddenly lowers (spike) is excluded from the CSV output data. FIG. 6 illustrates an example of data acquired by the 90-degree peeling test.

### (Material combination of base material and overlay layer)

It is preferable that the base material 11 and the overlay layer 14 contain an identical type of resin material in view of adhesiveness improvement. This resin material may be thermoplastic resin. It is preferable that each of the base material 11 and the overlay layer 14 contain polycarbonate (PC) resin or polyethylene terephthalate (PET) resin in view of environmental friendliness. It is preferable that each of the base material 11 and the overlay layer 14 contain polycarbonate (PC) resin or polyvinyl chloride (PVC) resin in view of durability improvement. It is preferable that each of the base material 11 and the overlay layer 14 contain polycarbonate (PC) resin in view of adhesiveness improvement, environmental friendliness, and durability improvement.

For example, whether the base material 11 and the overlay layer 14 contain an identical type of resin material can be checked in the following manner. Initially, the base material 11 and the overlay layer 14 are extracted from the laminate 10. Subsequently, an IR spectrum of each of the base material 11 and the overlay layer 14 is acquired by infrared absorption spectrometry (IR). Thereafter, whether the base material 11 and the overlay layer 14 contain an identical type of resin material is checked by comparison between the acquired IR spectra of the respective layers.

In addition, the type of the resin material contained in each of the base material 11 and the overlay layer 14 can be checked using the acquired IR spectra of the respective layers.

### [1.3 Manufacturing method of laminate]

An example of a manufacturing method of the laminate 10 according to the first embodiment of the present disclosure will hereinafter be described.

Initially, thermosetting resin is applied onto the base material 11 as a thermal adhesive to form the adhesive layer 12. Subsequently, the recording medium 20 is placed on the adhesive layer 12. Thereafter, thermosetting resin is applied onto the recording medium 20 as a thermal adhesive to form the adhesive layer 13, and then the overlay layer 14 is placed on the adhesive layer 13. Subsequently, the laminate thus obtained is clamped by metal plates, and pressurized with heat applied to thermally harden the adhesive layer 12 and the adhesive layer 13. It is preferable that the temperature applied to the laminate during thermal hardening be in a range of 100°C to 120°C in view of reduction of damage to the recording medium 20. As a result, the desired laminate 10 is obtained. The adhesive layer 13 may be formed by applying thermosetting resin to the overlay layer 14 and then placing the overlay layer 14 on the recording medium 20 with the applied resin film sandwiched between the overlay layer 14 and the recording medium 20. Alternatively, the adhesive layer 13 may be formed by bonding a sheet, which has been formed beforehand by applying thermosetting resin to a separator, for example, to the overlay layer 14 or the recording medium 20 by a method of thermal lamination or the like.

### [1.4 Recording method of laminate]

According to the laminate 10 of the first embodiment, a pattern or the like can be recorded in the recording medium 20 in the following manner, for example. Described herein by way of example is a case where the coloring layers 24, 27, and 30 produce cyan, magenta, and yellow, respectively.

Infrared light having a specific wavelength and a specific output is applied to the recording medium 20 via the overlay layer 14 by use of a semiconductor laser or the like, for example. In a case where the coloring layer 24 is desired to produce a color, infrared light having a wavelength of λ₁ is applied to the coloring layer 24 with energy sufficient for the coloring layer 24 to reach a coloring temperature. In this manner, the photothermal conversion material contained in the coloring layer 24 generates heat, and coloring reaction (color producing reaction) is caused between the coloring compound and the developer. As a result, cyan is produced at an irradiation portion. Similarly, in a case where the coloring layer 27 is desired to produce a color, infrared light having a wavelength of λ₂ is applied to the coloring layer 27 with energy sufficient for the coloring layer 27 to reach a coloring temperature. In a case where the coloring layer 30 is desired to produce a color, infrared light having a wavelength of λ₃ is applied to the coloring layer 30 with energy sufficient for the coloring layer 30 to reach a coloring temperature. In this manner, each of the photothermal conversion materials contained in the coloring layer 27 and the coloring layer 30 generates heat, and coloring reaction is caused between the coloring compound and the developer. As a result, magenta and yellow are produced at respective irradiation portions. Accordingly, a pattern or the like (e.g., full-color pattern etc.) can be recorded by application of infrared light having a corresponding wavelength to any portion.

### [1.5 Operation and effect]

As described above, the laminate 10 according to the first embodiment includes the intermediate layer 32B including the diffusion reduction layer 26 between the coloring layer 24 and the coloring layer 27, and the intermediate layer 32C including the diffusion reduction layer 29 between the coloring layer 27 and the coloring layer 30. The diffusion reduction layer 26 is capable of reducing diffusion of a coloring compound between the coloring layer 24 and the coloring layer 27 during heating of the recording medium 20. The diffusion reduction layer 29 is capable of reducing diffusion of a coloring compound between the coloring layer 27 and the coloring layer 30 during heating of the recording medium 20. Accordingly, reduction of a color gamut change of the recording medium 20 is achievable.

According to the laminate 10 of the first embodiment, the base material 11 and the recording medium 20 are bonded to each other by the adhesive layer 12 containing a thermal adhesive, and the recording medium 20 and the overlay layer 14 are bonded to each other by the adhesive layer 12 containing a thermal adhesive. In this manner, firm bonding is achievable between the base material 11 and the recording medium 20 and between the recording medium 20 and the overlay layer 14. Accordingly, anti-counterfeiting of the laminate 10 can improve. Moreover, anti-tampering of the laminate 10 can also improve. As a result, security of the laminate 10 can improve.

The recording medium 20 includes the coloring layers 24, 27, and 30. Accordingly, it is possible to form full-color picture images and the like of the laminate 10 constituting a plastic security card or the like.

The full-color recording medium 20 is included in a part of the surface of the laminate 10. This configuration achieves cost reduction in comparison with the full-color recording medium 20 included in the entire surface of the laminate 10.

The recording medium 20 is sealed inside the laminate 10. Accordingly, an influence of moisture on the recording medium 20 is allowed to decrease.

### <2 Second embodiment>

### [2.1 Configuration of laminate]

FIG. 7 is a cross-sectional diagram of a laminate 40 according to a second embodiment of the present disclosure. The laminate 40 is different from the laminate 10 according to the first embodiment in points that the adhesive layer 12 and the adhesive layer 13 are not provided, and that bonding between the base material 11 and the recording medium 20 and between the recording medium 20 and the overlay layer 14 is achieved by fusion.

According to the second embodiment, it is preferable that each of the base material 11, a first main surface of the recording medium 20, a second main surface of the recording medium 20, and the overlay layer 14 contain thermoplastic resin as plastic. When each of the base material 11, the first main surface of the recording medium 20, the second main surface of the recording medium 20, and the overlay layer 14 contains thermoplastic resin, adhesion strength by fusion between the layers increases. It is preferable that the thermoplastic resin be capable of thermally fusing the respective layers of the laminate 40 in a temperature range of 120°C to 200°C in view of reduction of damage to the recording medium 20.

The types of thermoplastic resin contained in the base material 11, the first main surface of the recording medium 20, the second main surface of the recording medium 20, and the overlay layer 14 may be either identical or different from each other. In a case where the base material 11, the first main surface of the recording medium 20, the second main surface of the recording medium 20, and the overlay layer 14 do not contain an identical type of thermoplastic resin, one or more portions of the base material 11, the first main surface of the recording medium 20, the second main surface of the recording medium 20, and the overlay layer 14 may contain thermoplastic resin of a type different from the other portions, or all of the base material 11, the first main surface of the recording medium 20, the second main surface of the recording medium 20, and the overlay layer 14 may contain thermoplastic resin of types different from each other.

In a case where the base material 11, the first main surface of the recording medium 20, the second main surface of the recording medium 20, and the overlay layer 14 contain an identical type of thermoplastic resin, it is preferable that each of the base material 11, the first main surface of the recording medium 20, the second main surface of the recording medium 20, and the overlay layer 14 contain at least one type selected from a set including semicrystalline thermoplastic resin and amorphous thermoplastic resin in view of improvement of adhesion strength by fusion between the layers.

For example, the semicrystalline thermoplastic resin contains at least one type selected from a set including polypropylene (PP), polyethylene (PE), polyacetal (POM), polyethylene terephthalate (PET), polybutylene terephthalate (PBT), polyphenylene sulfide (PPS), polyether etherketone (PEEK), and the like.

For example, the amorphous thermoplastic resin contains at least one type selected from a set including ABS resin, polycarbonate (PC), polymer-alloy of ABS resin and PC (hereinafter referred to as "ABS/PC polymer-alloy"), AS resin, polystyrene (PS), polymethyl methacrylate (PMMA), polyphenylene oxide (PPO), polysulfone (PSU), polyvinyl chloride (PVC), polyether imide (PEI), polyethersulfone (PES), and the like.

In a case where the base material 11, the first main surface of the recording medium 20, the second main surface of the recording medium 20, and the overlay layer 14 do not contain an identical type of thermoplastic resin, it is preferable that each of the base material 11, the first main surface of the recording medium 20, the second main surface of the recording medium 20, and the overlay layer 14 contain amorphous thermoplastic resin in view of improvement of adhesion strength by fusion between the layers.

The following combinations preferably are adopted as combinations of amorphous thermoplastic resin contained in each of two adjoining layers of the laminate 40. In a case where one of the two adjoining layers of the laminate 40 contains ABS resin, it is preferable that the other layer contain at least one type selected from a set including ABS/PC polymer-alloy, polycarbonate (PC), AS resin, polystyrene (PS), polymethyl methacrylate (PMMA), and polyvinyl chloride (PVC).

In a case where one of the two adjoining layers of the laminate 40 contains ABS/PC polymer-alloy, it is preferable that the other layer contains at least one type selected from a set including ABS resin, polycarbonate (PC), and polymethyl methacrylate (PMMA). In a case where one of the two adjoining layers of the laminate 40 contains polycarbonate (PC), it is preferable that the other layer contain at least one type selected from a set including ABS resin, ABS/PC polymer-alloy, and polymethyl methacrylate (PMMA).

In a case where one of the two adjoining layers of the laminate 40 contains AS resin, it is preferable that the other layer contain at least one type selected from a set including ABS resin, polystyrene (PS), polymethyl methacrylate (PMMA), and polyphenylene oxide (PPO). In a case where one of the two adjoining layers of the laminate 40 contains polystyrene (PS), it is preferable that the other layer contain at least one type selected from a set including AS resin and polyphenylene oxide (PPO) .

In a case where one of the two adjoining layers of the laminate 40 contains polymethyl methacrylate (PMMA), it is preferable that the other layer contain at least one type selected from a set including ABS resin, ABS/PC polymer-alloy, AS resin, and polyphenylene oxide (PPO). In a case where one of the two adjoining layers of the laminate 40 contains polyphenylene oxide (PPO), it is preferable that the other layer contain at least one type selected from a set including polycarbonate (PC), AS resin, polystyrene (PS), and polymethyl methacrylate (PMMA).

In a case where one of the two adjoining layers of the laminate 40 contains polysulfone (PSU), it is preferable that the other layer contain polycarbonate (PC). In a case where one of the two adjoining layers of the laminate 40 contains polyvinyl chloride (PVC), it is preferable that the other layer contain ABS resin.

### [2.2 Manufacturing method of laminate]

An example of a manufacturing method of the laminate 40 according to the second embodiment of the present disclosure will hereinafter be described.

Initially, the recording medium 20 is placed on one of the main surfaces of the base material 11, and then the overlay layer 14 is placed on the recording medium 20. Subsequently, the laminate thus obtained is clamped by metal plates and pressurized with heat to thermally fuse the laminate between the base material 11 and the recording medium 20 and between the recording medium 20 and the overlay layer 14. It is preferable that the temperature applied to the laminate during thermal fusion be in a range of 130°C to 200°C in view of reduction of damage to the recording medium 20 and in view of generation of sufficient fusion strength. As a result, the desired laminate 40 is obtained.

### [2.3 Operation and effect]

According to the laminate 40 of the second embodiment described above, fusion is made between the base material 11 and the recording medium 20 and between the recording medium 20 and the overlay layer 14. Firm bonding is therefore achievable between the base material 11 and the recording medium 20 and between the recording medium 20 and the overlay layer 14. Accordingly, anti-counterfeiting of the laminate 40 can improve. Moreover, anti-tampering of the laminate 40 can also improve. As a result, security of the laminate 40 can improve.

### <3 Modifications>

### (Modification 1)

While described in the first and second embodiments has been the example of the recording medium 20 which covers the entire first main surface of the base material 11, the recording medium 20 may have a hole 20HL as depicted in FIG. 8. Note that, while FIG. 8 depicts the example of the laminate 40 which includes the recording medium 20 having the hole 20HL, the laminate 10 may have the recording medium 20 having the hole 20HL.

The hole 20HL penetrates the recording medium 20 in a thickness direction. A pattern or the like given to the base material 11 may visually be recognizable through the hole 20HL, or the function of the base material 11 may be exerted through the hole 20HL. A transparent resin layer or the like may be fitted into the hole 20HL so as to secure flatness of the one main surface of the recording medium 20. However, the hole 20HL may be left in a hollow state.

### (Modification 2)

The laminate 40 according to the second embodiment may include an intermediate layer 15 between the base material 11 and the recording medium 20 as depicted in FIG. 9. Alternatively, the intermediate layer 15 may be provided between the recording medium 20 and the overlay layer 14 as depicted in FIG. 10. It is preferable that the intermediate layer 15 of the laminate 40 be provided between the base material 11 and the recording medium 20 in consideration of visibility of the recording medium 20. For example, the intermediate layer 15 has an IC (Integrated Circuit) chip 15A inside. For example, the intermediate layer 15 is a film or an adhesive agent layer.

The laminate 10 according to the first embodiment may include the intermediate layer 15 between the base material 11 and the adhesive layer 12, between the adhesive layer 12 and the recording medium 20, between the recording medium 20 and the adhesive layer 13, or between the adhesive layer 13 and the overlay layer 14.

### (Modification 3)

The laminate 40 according to the second embodiment may include a fine printing layer 16 between the base material 11 and the recording medium 20 as depicted in FIG. 11. Alternatively, the fine printing layer 16 may be provided between the recording medium 20 and the overlay layer 14 as depicted in FIG. 12. It is preferable that the fine printing layer 16 of the laminate 40 be provided between the base material 11 and the recording medium 20 in consideration of visibility of the recording medium 20. For example, the fine printing layer 16 has a specific fine printing pattern. The fine printing pattern may be a woven pattern or the like.

The laminate 10 according to the first embodiment may include the fine printing layer 16 between the base material 11 and the adhesive layer 12, between the adhesive layer 12 and the recording medium 20, between the recording medium 20 and the adhesive layer 13, or between the adhesive layer 13 and the overlay layer 14.

### (Modification 4)

According to the second embodiment, a barrier layer 17 may be provided on a side surface of the laminate 40 as depicted in FIG. 13. The barrier layer 17 may cover the entire side surface of the laminate 40 as depicted in FIG. 13 or may cover a part of the side surface of the laminate 40, such as a side surface of the recording medium 20, as depicted in FIG. 14. The barrier layer 17 is capable of protecting the side surface of the laminate 40.

For example, the barrier layer 17 is a UV-curable resin layer or a thermosetting resin layer. The barrier layer 17 provided on the side surface of the laminate 40 can reduce deterioration caused by entrance of moisture or the like into the recording medium 20 or the like. The barrier layer 17 may be provided on a side surface of the laminate 10 according to the first embodiment.

### (Modification 5)

While described in each of the first and second embodiments has been the example of the recording medium 20 which includes the three coloring layers (coloring layers 24, 27, and 30), the recording medium 20 may include a single coloring layer. In this case, the recording medium 20 may include a base material, a binder layer, a coloring layer, and a protection layer in this order. The coloring layer may produce black in a coloration state.

Moreover, the recording medium 20 may include coloring layers in plural number other than three (i.e., two coloring layers or four or more coloring layers). In this case, too, an intermediate layer may be provided between the adjoining coloring layers. The coloring layers may be capable of producing hues different from each other in the coloration state. Specifically, coloring compounds contained in the plurality of coloring layers may be capable of producing hues different from each other in the coloration state. Photothermal conversion agents contained in the plurality of coloring layers may have absorption wavelength peaks different from each other.

### (Modification 6)

The developer in the first and second embodiments may contain a compound expressed by following Formula (3) . 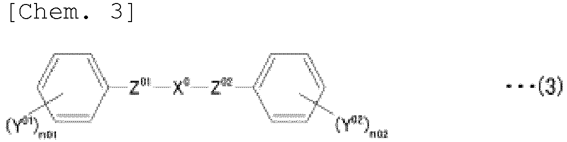 (Note that X° in Formula (3) is a bivalent group containing at least one benzene ring. Each of Y⁰¹ and Y⁰² is an independent univalent group. Each of n01 and n02 is any independent integer in a range of 0 to 5. In a case where n01 is any integer in a range of 2 to 5, Y⁰¹ may be identical to or different from each other. In a case where n02 is any integer in a range of 2 to 5, Y⁰² may be identical to or different from each other. Each of Z⁰¹ and Z⁰² is an independent hydrogen bond group.)

When X° contains at least one benzene ring, a melting point can become higher in comparison with a case where X° is an aliphatic hydrocarbon group (e.g., normal alkyl chain). Accordingly, a coloring maintaining property during storage at a high temperature and high humidity (hereinafter referred to as "high-temperature and high-humidity storage property") can improve. It is preferable that X° contain at least two benzene rings in view of improvement of the high-temperature and high-humidity storage property and heat resistance. For example, the high-temperature and high-humidity storage property is a storge property under an environment of 80°C and 60% RH. When the heat resistance improves, tolerance of the recording medium 20 to a severe process (e.g., integral molding using heating press, molten resin, etc.) improves. In a case where X° contains at least two benzene rings, these at least two benzene rings may be condensed. For example, naphthalene, anthracene, or the like is adoptable.

When each of Z⁰¹ and Z⁰² is an independent hydrogen bond group, developers are likely to be present closer to each other to some extent via hydrogen bonds. Accordingly, stability of the developers within the coloring layers 24, 27, and 30 improves. In the present description, the hydrogen bond group refers to a functional group which contains atoms capable of achieving hydrogen-bonding with atoms present in a different functional group, a different compound, or the like.

It is preferable that the developer contain a compound expressed by following Formula (4). 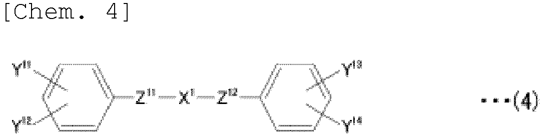 (Note that X¹ in Formula (4) is a bivalent group containing at least one benzene ring. Each of Y¹¹, Y¹², Y¹³, and Y¹⁴ is an independent univalent group. Each of Z¹¹ and Z¹² is an independent hydrogen bond group.)

When X¹ contains at least one benzene ring, a melting point can become higher in comparison with a case where X¹ is an aliphatic hydrocarbon group (e.g., normal alkyl chain). Accordingly, the high-temperature and high-humidity storage property can improve. It is preferable that X¹ contain at least two benzene rings in view of improvement of the high-temperature and high-humidity storage property and heat resistance. In a case where X¹ contains at least two benzene rings, these at least two benzene rings may be condensed. For example, naphthalene, anthracene, or the like is adoptable.

When each of Z¹¹ and Z¹² is an independent hydrogen bond group, developers are likely to be present closer to each other to some extent via hydrogen bonds. Accordingly, stability of the developers within the coloring layers 24, 27, and 30 improves.

In a case where each of Formula (3) and Formula (4) includes a hydrocarbon group, this hydrocarbon group is a general term of a group constituted by carbon (C) and hydrogen (H) and may be either a saturated hydrocarbon group or an unsaturated hydrocarbon group. The saturated hydrocarbon group is an aliphatic hydrocarbon group not having multiple bonds between carbons, while the unsaturated hydrocarbon group is an aliphatic hydrocarbon group having multiple bonds between carbons (double bonds between carbons or triple bonds between carbons).

In a case where each of Formula (3) and Formula (4) includes a hydrocarbon group, this hydrocarbon group may have a chain-shape or contain one ring or two or more rings. This chain shape may be a linear chain shape or a branched shape having one side chain or two or more side chains.

### (X°, X¹ containing one benzene ring)

For example, each of X° included in Formula (3) and X¹ included in Formula (4) is a bivalent group containing one benzene ring. For example, this bivalent group is expressed by following Formula (5). 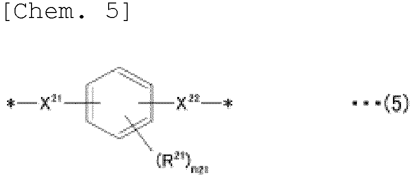 (Note that X²¹ in Formula (5) may be either given or not given. In a case where X²¹ is given, X²¹ is a bivalent group. X²² may be either given or not given. In a case where X²² is given, X²² is a bivalent group. R²¹ is a univalent group, while n21 is any integer in a range of 0 to 4. In a case where n21 is any integer in a range of 2 to 4, R²¹ may be either identical to or different from each other. A mark * indicates a bonding portion.)

Bonding positions of X²¹ and X²² with respect to the benzene ring are not limited to any specific positions in Formula (5). Specifically, each of the bonding positions of X²¹ and X²² with respect to the benzene ring may be any of an ortho position, a meta position, and a para position.

It is preferable that the bivalent group containing one benzene ring described above be expressed by following Formula (6) in view of improvement of the high-temperature and high-humidity storage property. 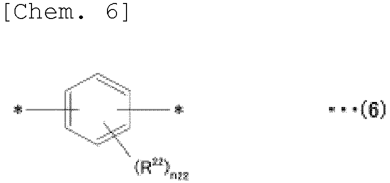 (Note that R²² in Formula (6) is a univalent group, and that n22 is any integer in a range of 0 to 4. In a case where n22 is any integer in a range of 2 to 4, R²² may be either identical to or different from each other. A mark * indicates a bonding portion.)

In a case where X° in Formula (3) is a bivalent group containing one benzene ring, bonding positions of Z⁰¹ and Z⁰² with respect to the benzene ring are not limited to any specific positions in Formula (6). Specifically, each of the bonding positions of Z⁰¹ and Z⁰² with respect to the benzene ring may be any of an ortho position, a meta position, and a para position.

In a case where X¹ in Formula (4) is a bivalent group containing one benzene ring, bonding positions of Z¹¹ and Z¹² with respect to the benzene ring are not limited to any specific positions in Formula (6). Specifically, each of the bonding positions of Z¹¹ and Z¹² with respect to the benzene ring may be any of an ortho position, a meta position, and a para position.

### (X²¹, X²²)

Each of X²¹ and X²² in Formula (5) is only required to be an independent bivalent group and not particularly limited to any kind. For example, each of X²¹ and X²² is a hydrocarbon group allowed to have a substituent. It is preferable that the hydrocarbon group have a chain shape. When the hydrocarbon group has a chain shape, the melting point of the developer is allowed to lower. Accordingly, the coloring compound can easily produce a color through melting of the developer by irradiation with laser light. A normal alkyl chain is particularly preferable in chain-shaped hydrocarbon groups in view of lowering of the melting point of the developer.

For example, the number of carbons of the hydrocarbon group allowed to have a substituent is in a range of 1 to 15, 1 to 13, 1 to 12, 1 to 10, 1 to 6, or 1 to 3.

In a case where each of X²¹ and X²² in Formula (5) is a normal alkyl group, the number of carbons of this normal alkyl group preferably is 8 or smaller, more preferably is 6 or smaller, further preferably is 5 or smaller, and particularly preferably is 3 or smaller in view of high-temperature storage stability. When the number of carbons of the normal alkyl group is 8 or smaller, the normal alkyl group has a small length. In this case, a thermal disturbance is not easily caused in the developer during high-temperature storage, and therefore, a portion interacting with a coloring compound, such as a leuco pigment, during color production is not considered to be easily separable. Accordingly, the coloring compound such as a leuco pigment does not easily decolor during high-temperature storage, and therefore, high-temperature storage stability improves.

For example, the substituent allowed to be contained in the hydrocarbon group is a halogen group (e.g., fluorine group), an alkyl group having a halogen group (e.g., fluorine group), or the like. The hydrocarbon group allowed to have a substituent may have an element, such as oxygen, substituted for a part of carbon of the hydrocarbon group (e.g., a part of carbon contained in a main chain of the hydrocarbon group).

### (R21)

R²¹ in Formula (5) is only required to be a univalent group and not particularly limited to any kind. For example, R²¹ is a hydrocarbon group allowed to have a halogen group or a substituent.

For example, the halogen group is a fluorine group (-F), a chlorine group (-Cl), a bromine group (-Br), or an iodine group (-1).

For example, the number of carbons of the hydrocarbon group allowed to have a substituent is in a range of 1 to 15, 1 to 13, 1 to 12, 1 to 10, 1 to 6, or 1 to 3.

For example, the substituent allowed to be contained in the hydrocarbon group is a halogen group (e.g., fluorine group), an alkyl group having a halogen group (e.g., fluorine group), or the like. The hydrocarbon group allowed to have a substituent may have an element, such as oxygen, substituted for a part of carbon of the hydrocarbon group (e.g., a part of carbon contained in a main chain of the hydrocarbon group).

### (R²²)

R²² in Formula (6) is only required to be a univalent group and not particularly limited to any kind. For example, R²² is a hydrocarbon group allowed to have a halogen group or a substituent. Each of the hydrocarbon groups allowed to have a halogen group or a substituent is similar to R²¹ in Formula (3) described above.

### (X°, X¹ containing two benzene rings)

For example, each of X° included in Formula (3) and X¹ included in Formula (4) is a bivalent group containing two benzene rings. For example, this bivalent group is expressed by following Formula (7). 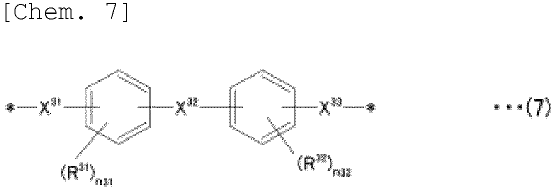 (Note that X³¹ in Formula (7) may be either given or not given. In a case where X³¹ is given, X³¹ is a bivalent group. X³² may be either given or not given. In a case where X³² is given, X³² is a bivalent group. X³³ may be either given or not given. In a case where X³³ is given, X³³ is a bivalent group. Each of R³¹ and R³² is an independent univalent group. Each of n31 and n32 is any independent integer in a range of 0 to 4. In a case where n31 is any integer in a range of 2 to 4, R³¹ may be identical to or different from each other. In a case where n32 is any integer in a range of 2 to 4, R³² may be identical to or different from each other. A mark * indicates a bonding portion.)

Bonding positions of X³¹ and X³² with respect to the benzene ring are not limited to any specific positions in Formula (7). Specifically, each of the bonding positions of X³¹ and X³² with respect to the benzene ring may be any of an ortho position, a meta position, and a para position. Similarly, in Formula (7), bonding positions of X³² and X³³ with respect to the benzene ring are not limited to any specific positions. Specifically, each of the bonding positions of X³² and X³³ with respect to the benzene ring may be any of an ortho position, a meta position, and a para position.

It is preferable that the bivalent group containing two benzene rings described above be expressed by following Formula (8) in view of improvement of the high-temperature and high-humidity storage property. 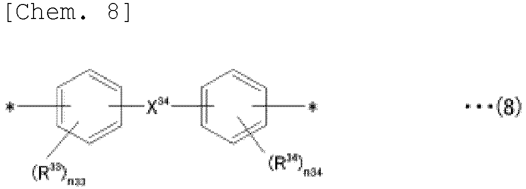 (Note that X³⁴ in Formula (8) is a bivalent group. Each of R³³ and R³⁴ is an independent univalent group. Each of n33 and n34 is any independent integer in a range of 0 to 4. In a case where n33 is any integer in a range of 2 to 4, R³³ may be identical to or different from each other. In a case where n34 is any integer in a range of 2 to 4, R³⁴ may be identical to or different from each other. A mark * indicates a bonding portion.)

In a case where X° in Formula (3) is a bivalent group containing two benzene rings, bonding positions of Z⁰¹ and X³⁴ with respect to the benzene ring are not limited to any specific positions in Formula (8). Specifically, each of the bonding positions of Z⁰¹ and X³⁴ with respect to the benzene ring may be any of an ortho position, a meta position, and a para position. Similarly, bonding positions of Z⁰² and X³⁴ with respect to the benzene ring are not limited to any specific positions in Formula (8). Specifically, each of the bonding positions of Z⁰² and X³⁴ with respect to the benzene ring may be any of an ortho position, a meta position, and a para position.

In a case where X¹ in Formula (4) is a bivalent group containing two benzene rings, bonding positions of Z¹¹ and X³⁴ with respect to the benzene ring are not limited to any specific positions in Formula (8). Specifically, each of the bonding positions of Z¹¹ and X³⁴ with respect to the benzene ring may be any of an ortho position, a meta position, and a para position. Similarly, bonding positions of Z¹² and X³⁴ with respect to the benzene ring are not limited to any specific positions in Formula (8). Specifically, each of the bonding positions of Z¹² and X³⁴ with respect to the benzene ring may be any of an ortho position, a meta position, and a para position.

### (X³¹, X³², X³³)

Each of X³¹, X³², and X³³ in Formula (7) is only required to be an independent bivalent group and is not particularly limited to any kind. For example, each of X³¹, X³², and X³³ is a hydrocarbon group allowed to have a substituent. This hydrocarbon group is similar to X²¹ and X²² in Formula (5) described above.

### (X³⁴)

X³⁴ in Formula (8) is only required to be a bivalent group and is not particularly limited to any kind. For example, X³⁴ is a hydrocarbon group allowed to have a substituent. This hydrocarbon group is similar to X²¹ and X²² in Formula (5) described above.

### (R³¹, R³²)

Each of R³¹ and R³² in Formula (7) is only required to be a univalent group and not particularly limited to any kind. For example, each of R³¹ and R³² is a hydrocarbon group allowed to have a halogen group or a substituent. Each of the hydrocarbon groups allowed to have a halogen group or a substituent is similar to R²¹ in Formula (5) described above.

### (R³³, R³⁴)

Each of R³³ and R³⁴ in Formula (8) is only required to be a univalent group and not particularly limited to any kind. For example, each of R³³ and R³⁴ is a hydrocarbon group allowed to have a halogen group or a substituent. Each of the hydrocarbon groups allowed to have a halogen group or a substituent is similar to R²¹ in Formula (5) described above.

### (Y⁰¹, Y⁰²)

Each of Y⁰¹ and Y⁰² in Formula (3) is an independent hydrocarbon group allowed to have a hydrogen group (-H), a hydroxy group (-OH), a halogen group (-X), a carboxy group (-COOH), an ester group (-COOR), or a substituent, for example.

For example, the halogen group is a fluorine group (-F), a chlorine group (-Cl), a bromine group (-Br), or an iodine group (-1).

For example, the number of carbons of the hydrocarbon group allowed to have a substituent is in a range of 1 to 15, 1 to 13, 1 to 12, 1 to 10, 1 to 6, or 1 to 3.

For example, the substituent allowed to be contained in the hydrocarbon group is a halogen group (e.g., fluorine group), an alkyl group having a halogen group (e.g., fluorine group), or the like. The hydrocarbon group allowed to have a substituent may have an element, such as oxygen, substituted for a part of carbon of the hydrocarbon group (e.g., a part of carbon contained in a main chain of the hydrocarbon group).

In Formula (3), it is preferable that one of (Y⁰¹)ₙ₀₁ and/or one of (Y⁰²)ₙ₀₂ be a hydroxy group (-OH). When one of (Y⁰¹)ₙ₀₁ and/or one of (Y⁰²)ₙ₀₂ is a hydroxy group (-OH), display quality and light resistance can improve.

### (y¹¹, Y¹², Y¹³, Y¹⁴)

Bonding positions of Y¹¹ and Y¹² with respect to the benzene ring are not limited to any specific positions in Formula (4). Specifically, each of the bonding positions of Y¹¹ and Y¹² with respect to the benzene ring may be any of an ortho position, a meta position, and a para position. Similarly, bonding positions of Y¹³ and Y¹⁴ with respect to the benzene ring are not limited to any specific positions in Formula (4). Specifically, each of the bonding positions of Y¹³ and Y¹⁴ with respect to the benzene ring may also be any of an ortho position, a meta position, and a para position. In Formula (4), the bonding positions of Y¹¹ and Y¹² with respect to one benzene may be either identical to or different from the bonding positions of Y¹³ and Y¹⁴ with respect to the other benzene.

Each of Y¹¹, Y¹², Y¹³, and Y¹⁴ in Formula (4) is an independent hydrocarbon group allowed to have a hydrogen group (-H), a hydroxy group (-OH), a halogen group, a carboxy group (-COOH), an ester group (-COOR), or a substituent, for example. Each of the hydrocarbon groups allowed to have a halogen group or a substituent is similar to Y⁰¹ and Y⁰² in Formula (3) described above.

In Formula (4), it is preferable that each of Y¹¹ and/or Y¹³ be a hydroxy group (-OH) . When Y¹¹ and/or Y¹³ is a hydroxy group (-OH), display quality and light resistance are allowed to improve.

### (Z⁰¹, Z⁰²)

Each of Z⁰¹ and Z⁰² in Formula (3) is an independent urea bond (-NHCONH-), an independent amide bond (-NHCO-, -OCHN-), or an independent hydrazide bond (-NHCOCONH-), for example. It is preferable that each of Z⁰¹ and Z⁰² be a urea bond in view of improvement of the high-temperature and high-humidity storage property. In a case where Z⁰¹ is an amide bond, nitrogen contained in this amide bond may be bonded with benzene, or carbon contained in this amide bond may be bonded with benzene. In a case where Z⁰² is an amide bond, nitrogen contained in this amide bond may be bonded with benzene, or carbon contained in this amide bond may be bonded with benzene.

### (Z¹¹, Z¹²)

Each of Z¹¹ and Z¹² in Formula (4) is an independent urea bond (-NHCONH-), an independent amide bond (-NHCO-, -OCHN-), or an independent hydrazide bond (-NHCOCONH-). It is preferable that each of Z¹¹ and Z¹² be a urea bond in view of improvement of the high-temperature and high-humidity storage property. In a case where Z¹¹ is an amide bond, nitrogen contained in this amide bond may be bonded with benzene, or carbon contained in this amide bond may be bonded with benzene. In a case where Z¹² is an amide bond, nitrogen contained in this amide bond may be bonded with benzene, or carbon contained in this amide bond may be bonded with benzene.

### (Specific example of developer)

Specifically, for example, the developer which has X° in Formula (3) and X¹ in Formula (4) each including one benzene ring contains at least one type selected from a set including compounds expressed in following Formulae (9-1) to (9-6).

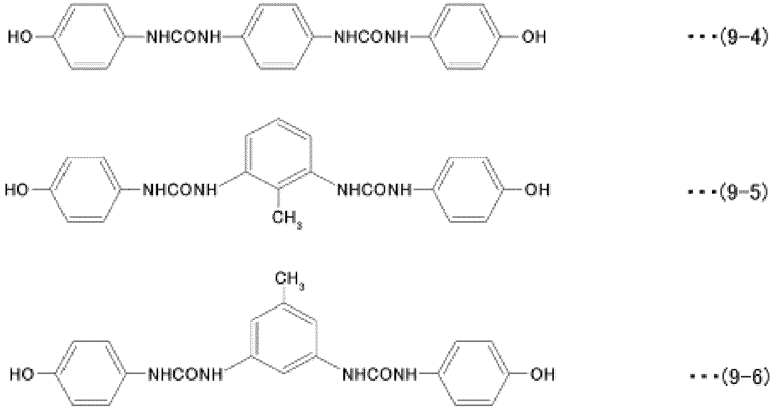

The developer which has X° in Formula (3) and X¹ in Formula (4) each including two benzene rings contains at least one type selected from a set including compounds expressed in following Formulae (10-1) to (10-8).

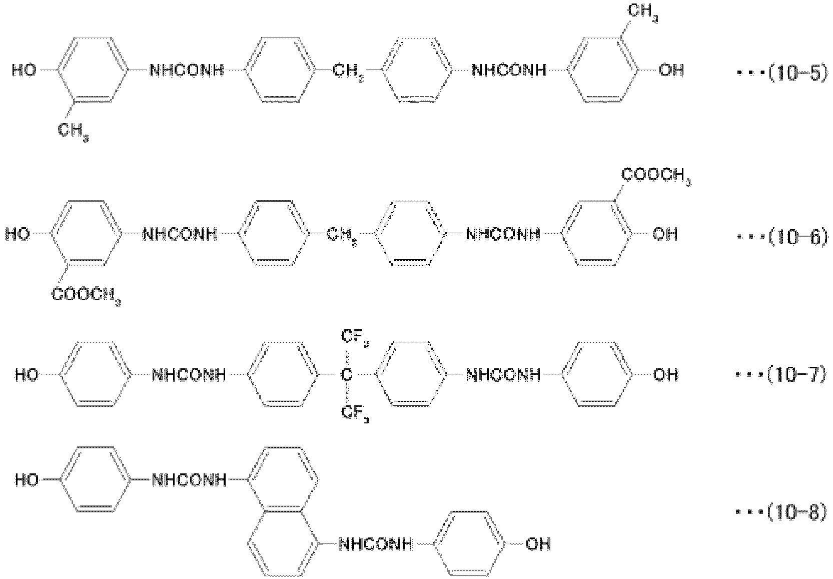

### (Modification 7)

While described in the first and second embodiments have been the examples of the laminates 10 and 40, respectively, each including the recording medium 20 (see FIG. 3), each of the laminates 10 and 40 may include a recording medium 20A depicted in FIG. 15 instead of the recording medium 20.

The recording medium 20A includes the base material 21, the binder layer 22, the coloring layer 24, an intermediate layer 35A, the coloring layer 27, an intermediate layer 35B, the coloring layer 30, an intermediate layer 35C, and a protection layer 36 in this order. More specifically, the recording medium 20A includes the base material 21, the binder layer 22, the coloring layer 24, the diffusion reduction layer 26, the binder layer 25, the coloring layer 27, the diffusion reduction layer 29, the binder layer 28, the coloring layer 30, the diffusion reduction layer 34, the binder layer 33, and the protection layer 36 in this order.

The intermediate layer 35A is similar to the intermediate layer 32B of the recording medium 20 except that the diffusion reduction layer 26 is adjacent to the coloring layer 24 and that the binder layer 25 is adjacent to the coloring layer 27. The intermediate layer 35B is similar to the intermediate layer 32C of the recording medium 20 except that the diffusion reduction layer 29 is adjacent to the coloring layer 27 and that the binder layer 28 is adjacent to the coloring layer 30. The intermediate layer 35C is similar to the intermediate layer 32D of the recording medium 20 except that the diffusion reduction layer 34 is adjacent to the coloring layer 30 and that the binder layer 33 is adjacent to the protection layer 36.

The protection layer 36 includes a UV-curable resin layer 36A, a UV-cut layer 36B, a binder layer 36C, and a base material 36D in order on one main surface of the intermediate layer 35C. The UV-curable resin layer 36A is capable of protecting a surface of the recording medium 20A. The UV-curable resin layer 36A may have a function of a diffusion reduction layer and/or a function of a diffusion prevention layer. The UV-cut layer 36B is capable of cutting off ultraviolet light entering the coloring layers 24, 27, and 30.

The binder layer 36C is capable of bonding the UV-cut layer 36B and the base material 36D together.

Examples of the material of the binder layer 36C can include materials similar to those of the binder layers 22, 25, 28, and 33. The base material 36D is capable of supporting the UV-curable resin layer 36A, the UV-cut layer 36B, and the binder layer 36C. The base material 36D is capable of protecting the surface of the recording medium 20A. Examples of the material of the base material 36D can include materials similar to those of the base material 11.

It is preferable that a matrix polymer contained in the coloring layer 24 and a resin material contained in the diffusion reduction layer 26 include an identical type of resin material in view of improvement of adhesiveness. It is preferable that a matrix polymer contained in the coloring layer 27 and a resin material contained in the diffusion reduction layer 29 include an identical type of resin material in view of improvement of adhesiveness. It is preferable that a matrix polymer contained in the coloring layer 30 and a resin material contained in the diffusion reduction layer 34 include an identical type of resin material in view of improvement of adhesiveness.

It is preferable that each of the matrix polymer contained in the coloring layer 24 and the resin material contained in the diffusion reduction layer 26 include amorphous resin in view of improvement of adhesiveness. It is preferable that each of the matrix polymer contained in the coloring layer 27 and the resin material contained in the diffusion reduction layer 29 include amorphous resin in view of improvement of adhesiveness. It is preferable that each of the matrix polymer contained in the coloring layer 30 and the resin material contained in the diffusion reduction layer 34 include amorphous resin in view of improvement of adhesiveness.

It is preferable that each of the matrix polymer contained in the coloring layer 24 and the resin material contained in the diffusion reduction layer 26 include crystalline resin in view of improvement of adhesiveness. It is preferable that each of the matrix polymer contained in the coloring layer 27 and the resin material contained in the diffusion reduction layer 29 include crystalline resin in view of improvement of adhesiveness. It is preferable that each of the matrix polymer contained in the coloring layer 30 and the resin material contained in the diffusion reduction layer 34 include crystalline resin in view of improvement of adhesiveness.

### (Modification 8)

Each of the laminates 10 and 40 may include a recording medium 20B depicted in FIG. 16 instead of the recording medium 20 (see FIG. 3). The recording medium 20B is different from the recording medium 20 in a point that the protection layer 36 is provided instead of the protection layer 31. The protection layer 36 is identical to the protection layer 36 described in Modification 7. As depicted in FIG. 28, the recording medium 20B may further include a binder layer 81 between the coloring layer 30 and the protection layer 36. The binder layer 81 bonds the coloring layer 30 and the protection layer 36 together. The binder layer 81 provided between the coloring layer 30 and the protection layer 36 can improve adhesiveness between the coloring layer 30 and the protection layer 36. The binder layer 81 may be an optical binder sheet such as an OCA (Optical Clear Adhesive). Examples of a binder agent contained in the binder layer 81 can include materials similar to those of the binder layers 22, 25, 28, and 33. While depicted in each of FIGS. 16 and 28 is the example of the recording medium 20B which includes the base material 21 and the intermediate layer 32A, the base material 21 and the intermediate layer 32A may be eliminated from the recording medium 20B.

### (Modification 9)

Each of the laminates 10 and 40 may include a recording medium 20C depicted in FIG. 17 instead of the recording medium 20 (see FIG. 3). The recording medium 20C is different from the recording medium 20A in a point that intermediate layers 37A, 37B, and 37C are provided instead of the intermediate layers 35A, 35B, and 35C. The base material 21 and the binder layer 22 may be eliminated from the recording medium 20C.

The intermediate layer 37A includes a diffusion reduction layer 26A and the binder layer 25 in order on one main surface of the coloring layer 24. The diffusion reduction layer 26A includes a resin layer 26A1 and a UV-curable resin layer 26A2 in order on the one main surface of the coloring layer 24. The resin layer 26A1 is provided between the coloring layer 24 and the UV-curable resin layer 26A2. The resin layer 26A1 is capable of improving adhesiveness between the coloring layer 24 and the UV-curable resin layer 26A2. The resin layer 26A1 contains a resin material of a type identical to the matrix polymer contained in the coloring layer 24. For example, in a case where the coloring layer 24 contains polycarbonate resin as the matrix polymer, the resin layer 26A1 contains polycarbonate resin. The UV-curable resin layer 26A2 is similar to the UV-curable resin layer of the diffusion reduction layer 26 of the first embodiment.

The intermediate layer 37B includes a diffusion reduction layer 29A and the binder layer 28 in order on one main surface of the coloring layer 27. The diffusion reduction layer 29A includes a resin layer 29A1 and a UV-curable resin layer 29A2 in order on the one main surface of the coloring layer 27. The resin layer 29A1 is provided between the coloring layer 27 and the UV-curable resin layer 29A2. The resin layer 29A1 is capable of improving adhesiveness between the coloring layer 27 and the UV-curable resin layer 29A2. The resin layer 29A1 contains a resin material of a type identical to the matrix polymer contained in the coloring layer 27. For example, in a case where the coloring layer 27 contains polycarbonate resin as the matrix polymer, the resin layer 29A1 contains polycarbonate resin. The UV-curable resin layer 29A2 is similar to the UV-curable resin layer of the diffusion reduction layer 29 of the first embodiment.

The intermediate layer 37C includes a diffusion reduction layer 34A and the binder layer 33 in order on one main surface of the coloring layer 30. The diffusion reduction layer 34A includes a resin layer 34A1 and a UV-curable resin layer 34A2 in order on the one main surface of the coloring layer 30. The resin layer 34A1 is provided between the coloring layer 30 and the UV-curable resin layer 34A2. The resin layer 34A1 is capable of improving adhesiveness between the coloring layer 30 and the UV-curable resin layer 34A2. The resin layer 34A1 contains a resin material of a type identical to the matrix polymer contained in the coloring layer 30. For example, in a case where the coloring layer 30 contains polycarbonate resin as the matrix polymer, the resin layer 34A1 contains polycarbonate resin. The UV-curable resin layer 34A2 is similar to the UV-curable resin layer of the diffusion reduction layer 34 of the first embodiment.

The resin layer 26A1 is provided between the coloring layer 24 and the UV-curable resin layer 26A2 for the following reason. In a case where the coloring layer 24 contains a particulate developer, particles of the particulate developer are distributed on the surface of the coloring layer 24. Accordingly, in a case where the coloring layer 24 and the UV-curable resin layer 26A2 are adjacent to each other, adhesiveness may be lowered. When the resin layer 26A1 is adjacent to the coloring layer 24 and contains a resin material of the type identical to the matrix polymer contained in the coloring layer 24 as described above, adhesiveness of an interface can improve in a portion other than the portion where the developer is distributed. Accordingly, adhesiveness lowering caused by the particulate developer can be compensated for.

The resin layer 29A1 between the coloring layer 27 and the UV-curable resin layer 29A2 and the resin layer 34A1 between the coloring layer 30 and the UV-curable resin layer 34A2 are provided for a reason similar to the reason why the resin layer 26A1 is provided between the coloring layer 24 and the UV-curable resin layer 26A2.

### (Modification 10)

Each of the laminates 10 and 40 may include a recording medium 20D depicted in FIG. 18 instead of the recording medium 20 (see FIG. 3) included in the laminate 10. The recording medium 20D is different from the recording medium 20A in a point that intermediate layers 38A, 38B, and 38C are provided instead of the intermediate layers 35A, 35B, and 35C.

The intermediate layer 38A includes a diffusion reduction layer 26B and the binder layer 25 in order on one main surface of the coloring layer 24. The diffusion reduction layer 26B includes a binder layer 26B1 and a UV-curable resin layer 26B2 in order on the one main surface of the coloring layer 24. The binder layer 26B1 is provided between the coloring layer 24 and the UV-curable resin layer 26B2. The binder layer 26B1 is capable of bonding the coloring layer 24 and the UV-curable resin layer 26B2 together. The binder layer 26B1 provided between the coloring layer 24 and the UV-curable resin layer 26B2 can compensate for adhesiveness lowering caused by the developer contained in the coloring layer 24. Examples of the material of the binder layer 26B1 can include materials similar to those of the binder layers 22, 25, 28, and 33.

The intermediate layer 38B includes a diffusion reduction layer 29B and the binder layer 28 in order on one main surface of the coloring layer 27. The diffusion reduction layer 29B includes a binder layer 29B1 and a UV-curable resin layer 29B2 in order on the one main surface of the coloring layer 27. The binder layer 29B1 is provided between the coloring layer 27 and the UV-curable resin layer 29B2. The binder layer 29B1 is capable of bonding the coloring layer 27 and the UV-curable resin layer 29B2 together. The binder layer 29B1 provided between the coloring layer 27 and the UV-curable resin layer 29B2 can compensate for adhesiveness lowering caused by the developer contained in the coloring layer 27. Examples of the material of the binder layer 29B1 can include materials similar to those of the binder layers 22, 25, 28, and 33.

The intermediate layer 38C includes a diffusion reduction layer 34B and the binder layer 33 in order on one main surface of the coloring layer 30. The diffusion reduction layer 34B includes a binder layer 34B1 and a UV-curable resin layer 34B2 in order on the one main surface of the coloring layer 30. The binder layer 34B1 is provided between the coloring layer 30 and the UV-curable resin layer 34B2. The binder layer 34B1 is capable of bonding the coloring layer 30 and the UV-curable resin layer 34B2 together. The binder layer 34B1 provided between the coloring layer 30 and the UV-curable resin layer 34B2 can compensate for adhesiveness lowering caused by the developer contained in the coloring layer 30. Examples of the material of the binder layer 34B1 can include materials similar to those of the binder layers 22, 25, 28, and 33.

### (Modification 11)

Each of the laminates 10 and 40 may include a recording medium 20E depicted in FIG. 19 instead of the recording medium 20 (see FIG. 3). The recording medium 20E is different from the recording medium 20A in a point that intermediate layers 39A, 39B, and 39C are provided instead of the intermediate layers 35A, 35B, and 35C. The base material 21 and the binder layer 22 may be eliminated from the recording medium 20E.

Each of the intermediate layers 39A and 39B is a film. It is preferable that the film be a film processed for easy adhesion. Examples of the material of the film can include materials similar to those of the base material 11. For example, the process for easy adhesion is priming, active energy ray irradiation, plasma processing, corona treatment, vapor deposition, etching, sandblasting, or the like. One type or a combination of two or more types of these processes can be selected. The priming herein may be priming using resin, a silane coupling agent, tetraalkoxysilane, or the like.

The film processed for easy adhesion provided as the intermediate layer 39A between the coloring layer 24 and the coloring layer 27 can compensate for adhesiveness lowering caused by the developer contained in the coloring layer 24. The film processed for easy adhesion provided as the intermediate layer 39B between the coloring layer 27 and the coloring layer 30 can compensate for adhesiveness lowering caused by the developer contained in the coloring layer 27.

The intermediate layer 39C is a binder layer. Examples of the material of the binder layer can include materials similar to those of the binder layers 22, 25, 28, and 33. The binder layer provided as the intermediate layer 39C between the coloring layer 30 and the protection layer 36 can compensate for adhesiveness lowering caused by the developer contained in the coloring layer 30.

### (Modification 12)

Each of the laminates 10 and 40 may include a recording medium 20F depicted in FIG. 20 instead of the recording medium 20 (see FIG. 3). The recording medium 20F is different from the recording medium 20E of Modification 11 in a point that an intermediate layer 41B is provided instead of the intermediate layer 39B.

The intermediate layer 41B includes a resin layer 41B1 and a resin layer 41B2 in order on one main surface of the coloring layer 27. The resin layer 41B1 contains a resin material of a type identical to the matrix polymer contained in the coloring layer 27. For example, in a case where the coloring layer 27 contains polycarbonate resin as the matrix polymer, the resin layer 41B1 contains polycarbonate resin. The resin layer 41B2 is a film. It is preferable that the film be a film processed for easy adhesion. Examples of the material of the film can include materials similar to those of the base material 11.

The resin layer 41B1 provided between the coloring layer 27 and the resin layer 41B2 as described above can compensate for adhesiveness lowering caused by the developer contained in the coloring layer 27.

### (Modification 13)

Each of the laminates 10 and 40 may include a recording medium 20G depicted in FIG. 21 instead of the recording medium 20 (see FIG. 3). The recording medium 20G is different from the recording medium 20E of Modification 11 in points that the intermediate layer 38A is provided instead of the intermediate layer 39A and that a base material 42 is provided.

The intermediate layer 38A is identical to the intermediate layer 38A described in Modification 10 (see FIG. 18). The base material 42 is provided adjacently to the other surface of the coloring layer 24. The base material 42 is a film processed for easy adhesion. Examples of the material of the film can include materials similar to those of the base material 11.

### (Modification 14)

Each of the laminates 10 and 40 may include a recording medium 20H depicted in FIG. 22 instead of the recording medium 20 (see FIG. 3). The recording medium 20H is different from the recording medium 20A in a point that intermediate layers 42A and 42B are provided instead of the intermediate layers 35A and 35B.

Each of the intermediate layers 42A and 42B is a binder layer. Examples of the material of the binder layer can include materials similar to those of the binder layers 22, 25, 28, and 33.

### (Modification 15)

While described in each of the first and second embodiments and the modifications thereof have been the case where each of the laminates 10 and 40 is applied to a card, each of the laminates 10 and 40 may be applied to housings of medical supplies, car components, cars, toys, foods, cosmetics, clothes, documents (e.g., passports, etc.), external components, electronic apparatuses, or the like. Specific examples of the external components include interiors or exteriors of buildings, such as walls, exteriors of furniture, such as desks, and the like. Specific examples of the electronic apparatuses include personal computers (hereinafter referred to as "PCs"), mobile apparatuses, cellular phones (e.g., smartphones), tablet-type computers, display devices, imaging devices, audio equipment, game devices, industrial tools, medical devices, robots, wearable terminals, and the like. Specific examples of the wearable terminals include decorative items, such as watches (wristwatches), bags, clothes, hats, glasses, or shoes.

Described hereinafter will be specific examples of the laminate 10 or 40 applied to a smartphone, a laptop personal computer, and a cosmetic container.

### (Example of smartphone)

FIG. 23A depicts an external appearance configuration of a front surface of a smartphone 100, while FIG. 23B depicts an external appearance configuration of a back surface of the smartphone 100 depicted in FIG. 23A. For example, the smartphone 100 herein includes a display unit 111 and a housing 112. The recording medium 20 is provided on the back surface side of the housing 112. The housing 112 includes a laminate. This laminate is similar to either the laminate 10 or the laminate 40 according to the first and second embodiments and the modifications thereof, except that a base material has a housing shape of the smartphone 100. This configuration can improve anti-counterfeiting and the like of the smartphone 100.

### (Example of laptop PC)

FIG. 24 depicts an external appearance configuration of a laptop PC 200. The laptop PC 200 includes a computer main body 210 and a display 220. The computer main body 210 includes a housing 211, a keyboard 212, a wheel/pad operation unit 213, and click buttons 214 and 215. The recording medium 20 is provided on the housing 112. The housing 211 includes a laminate. This laminate is similar to either the laminate 10 or the laminate 40 according to the first and second embodiments and the modifications thereof, except that a base material has a housing shape of the laptop PC 200. This configuration can improve anti-counterfeiting and the like of the laptop PC 200.

### (Example of cosmetic container)

FIG. 25 depicts an external appearance of a cosmetic container 300. The cosmetic container 300 herein includes a container portion 311 and a cover 312 covering the container portion 311. The recording medium 20 is provided on the cover 312. The cover 312 includes a laminate. This laminate is similar to either the laminate 10 or the laminate 40 according to the first and second embodiments and the modifications thereof, except that a base material has a shape corresponding to the cover 312. This configuration can improve anti-counterfeiting and the like of the cosmetic container 300.

### (Example of passport)

FIG. 26 depicts an external appearance of a booklet 400. The booklet 400 is a passport. The passport is an example of a booklet-type ID document. The booklet 400 includes a plurality of sheets 410. The plurality of sheets 410 is bound by saddle stitches. The recording medium 20 and the like are provided at least on one surface or both surfaces of any of the sheets 410. A face photo or the like is drawn on the recording medium 20 and the like. Each of the sheets 410 is similar to either the laminate 10 or the laminate 40 according to the first and second embodiments and the modifications thereof. In this case, the base material 11 may be paper or the like.

The present disclosure is not limited to the embodiments and the modifications specifically described above and may be modified in various manners on the basis of the technical ideas of the present disclosure.

For example, configurations, methods, steps, shapes, materials, numerical values, and the like included in the embodiments and the modifications described above are presented only by way of example. Accordingly, configurations, methods, steps, shapes, materials, numerical values, and the like different from those described above may be adopted as necessary. The configurations, the methods, the steps, the shapes, the materials, the numerical values, and the like of the embodiments and the modifications described above may be combined with each other within the scope of the subject matters of the present disclosure.

An upper limit or a lower limit within a numerical value range in a certain stage included in numerical value ranges described by stages in the embodiments and the modification described above may be replaced with an upper limit or a lower limit in a numerical value range in a different stage. Each of the materials presented by way of example in the embodiments and the modifications described above may be used separately as a single material, or two or more of these materials may be combined and used unless otherwise noted.

Moreover, the present disclosure can also adopt the following configurations.
(1) A recording medium including:
   a plurality of coloring layers; and
   at least one diffusion reduction layer, in which
   each of the coloring layers includes a coloring compound that is electron-donative, a developer that is electron-acceptive, and matrix resin,
   the diffusion reduction layer is provided between the coloring layers adjacent to each other, and
   the diffusion reduction layer is capable of reducing diffusion of the coloring compound between the coloring layers adjacent to each other during heating of the recording medium.
(2) The recording medium according to (1), further including:
   at least one binder layer, in which
   the binder layer is provided between the diffusion reduction layer and the coloring layers.
(3) The recording medium according to (1) or (2), in which average peel strength between the respective layers of the recording medium is 3.5 N/cm or higher.
(4) The recording medium according to (1) or (2), in which average peel strength between the coloring layers adjacent to each other is lower than 3.5 N/cm.
(5) The recording medium according to any one of (1) to (4), in which the matrix resin contains polycarbonate resin.
(6) The recording medium according to any one of (1) to (5), in which a temperature of the heating ranges from 120°C to 200°C.
(7) The recording medium according to any one of (1) to (6), in which a temperature of the heating ranges from 160°C to 200°C.
(8) The recording medium according to any one of (1) to (7), in which the diffusion reduction layer is a resin layer that has no tackiness in an atmosphere of a standard state at a temperature of 23°C ± 1°C and relative humidity of 50% ± 5%.
(9) The recording medium according to any one of (1) to (8), in which the diffusion reduction layer has a Young's modulus of 100 MPa or higher.
(10) The recording medium according to any one of (1) to (9), in which the diffusion reduction layer has a Young's modulus of 2000 MPa or higher.
(11) The recording medium according to any one of (1) to (10), in which the diffusion reduction layer is a resin layer that has pencil hardness of F or higher.
(12) The recording medium according to any one of (1) to (11), in which the diffusion reduction layer has a glass transition temperature of 130°C or higher.
(13) The recording medium according to any one of (1) to (12), in which the diffusion reduction layer contains amorphous resin.
(14) The recording medium according to any one of (1) to (12), in which the diffusion reduction layer contains crystalline resin.
(15) The recording medium according to any one of (1) to (14), in which the diffusion reduction layer contains UV-curable resin.
(16) A laminate including:
   the recording medium according to any one of (1) to (15) ;
   a base material; and
   an overlay layer, in which
   the recording medium is provided between the base material and the overlay layer.
(17) The laminate according to (16), in which the base material and the recording medium are bonded to each other by fusion or a thermal adhesive, and the recording medium and the overlay layer are bonded to each other by fusion or a thermal adhesive.

### <4 Reference examples and practical examples>

The present disclosure will hereinafter be specifically described on the basis of reference examples and practical examples. However, the present disclosure is not limited to these reference examples and practical examples.

### [Reference example 1-1]

Initially, an adhesive layer is arranged on a base material, and then an overlay layer is arranged on the adhesive layer. In this manner, a laminate structure is obtained. Subsequently, this laminate structure is pressure-heated at a temperature of 120°C to bond the base material and the overlay layer via the adhesive layer. In this manner, a desired laminate is obtained.

The base material, the adhesive layer, and the overlay layer to be adopted are as follows.
Overlay layer: polycarbonate film (hereinafter referred to as a "PC film") 50 um in thickness
Adhesive layer: epoxy resin layer 5 um in thickness (thermosetting resin layer)
Base material: PC film 25 um in thickness

### [Reference example 1-2]

A laminate is obtained in a manner similar to the manner of Reference 1-1 except that the following is adopted as the base material and the overlay layer.
Overlay layer: polyvinyl chloride film (hereinafter referred to as a "PVC film") 50 um in thickness
Base material: PVC vinyl film 25 um in thickness

### [Reference example 1-3]

A laminate is obtained in a manner similar to the manner of Reference 1-1 except that the following is adopted as the base material and the overlay layer.
Overlay layer: polyethylene terephthalate film (hereinafter referred to as a "PET film") 50 µm in thickness
Base material: PET film 25 um in thickness

### [Reference example 1-4]

A laminate is obtained in a manner similar to the manner of Reference 1-1 except that the following is adopted as the base material and the overlay layer.
Overlay layer: PET film 50 um in thickness
Base material: PC film 25 um in thickness

### [Reference examples 2-1, 2-2, 2-3, 2-4]

Laminates are obtained in manners similar to the manners of Reference examples 1-1, 1-2, 1-3, and 1-4 except for the following points. A base material and an overlay layer are laminated in order, and a laminate structure is obtained. Subsequently, this laminate structure is pressure-heated at a temperature of 180°C to fuse the base material and the overlay layer.

### [Evaluation]

Adhesiveness, environmental friendliness, and durability of the laminates obtained as described above are evaluated in the following manner.

### (Adhesiveness)

Initially, average peel strength between the base material and the overlay layer is measured. This average peel strength is measured by using the method for measuring laminate average peel strength as explained in the first embodiment. Subsequently, the measured average peel strength is evaluated on the basis of the following criteria. Table 1 presents evaluation results.
Excellent: Average peel strength between the base material and the overlay layer is 5.0 N/cm or higher.
Good: Average peel strength between the base material and the overlay layer is 3.5 N/cm or higher.
Poor: Average peel strength between the base material and the overlay layer is lower than 3.5 N/cm.

### (Environmental friendliness)

Environmental friendliness of each laminate is evaluated on the basis of the following criteria. Table 1 presents evaluation results.
Good: There is no possibility of generation of harmful substances (particularly, dioxin) during processing of the laminate in insufficient facilities.
Poor: There is a possibility of generation of harmful substances (particularly, dioxin) during processing of the laminate in insufficient facilities.

### (Durability)

Durability of each laminate is evaluated on the basis of the following criteria. Table 1 presents evaluation results.
Good: Absence of a change (bend) of the external appearance after heating
Poor: Presence of a change (bend) of the external appearance after heating

**[Table 1]**

| | Reference example 1-1 | Reference example 1-2 | Reference example 1-3 | Reference example 1-4 | Reference example 2-1 | Reference exam p le 2-2 | Reference example 2-3 | Reference example 2-4 |
|---|---|---|---|---|---|---|---|---|
| Overlay layer | PC | PVC | PET | PET | PC | PVC | PET | PET |
| Adhesive layer | Therm osetting resin (epoxy resin) | | | | None | | | |
| Base material | PC | PVC | PET | PC | PC | PVC | PET | PC |
| Adhesiveness | Good | Good | Good | Good | Excellent | Excellent | Excellent | Excellent |
| Environm ental friend liness | Good | Poor | Good | Good | Good | Poor | Good | Good |
| Durability* | Good | Good | Good | Poor | Good | Good | Good | Poor |
| *External appearance change (bend) after heating | | | | | | | | |

The following is recognizable from Table 1.

Preferable adhesiveness can be ontained by bonding the base material and the overlay layer together via thermosetting resin or by fusion.

It is preferable to bond the material and the overlay layer together by fusion in view of improvement of adhesiveness.

It is preferable to use a PC film or a PET film as the base material and the overlay layer in view of environmental friendliness.

It is preferable to use a PC film or a PVC film as the base material and the overlay layer in view of improvement of durability.

It is preferable to use a PC film as the base material and the overlay layer in view of environmental friendliness and improvement of durability.

### (Practical examples 1 to 3)

Initially, a recording medium having the layer configuration depicted in FIG. 15 is produced by laminating respective layers presented in Table 2. Subsequently, a laminate is obtained in a manner similar to the manner of Reference example 2-1 except that the recording medium is sandwiched between the base material and the overlay layer. Note that an interface of the recording medium is also bonded by a pressure-heating process after lamination of the base material, the intermediate layer, and the overlay layer.

### (Practical example 4)

A laminate is obtained in a manner similar to the manner of Practical example 1 except for a point that a recording medium having the layer configuration depicted in FIG. 22 is produced by laminating respective layers presented in Table 3.

### (Practical example 5)

A laminate is obtained in a manner similar to the manner of Practical example 1 except for a point that a recording medium having the layer configuration depicted in FIG. 17 is produced by laminating the respective layers presented in Table 3.

### (Practical example 6)

A laminate is obtained in a manner similar to the manner of Practical example 1 except for a point that a recording medium having the layer configuration depicted in FIG. 18 is produced by laminating the respective layers presented in Table 3.

### (Practical example 7)

A laminate is obtained in a manner similar to the manner of Practical example 1 except for a point that a recording medium having the layer configuration depicted in FIG. 19 is produced by laminating respective layers presented in Table 4.

### (Practical example 8)

A laminate is obtained in a manner similar to the manner of Practical example 1 except for a point that a recording medium having the layer configuration depicted in FIG. 20 is produced by laminating the respective layers presented in Table 4.

### (Practical example 9)

A laminate is obtained in a manner similar to the manner of Practical example 1 except for a point that a recording medium having the layer configuration depicted in FIG. 19 is produced by laminating the respective layers presented in Table 4.

### (Practical example 10)

A laminate is obtained in a manner similar to the manner of Practical example 1 except for a point that a recording medium having the layer configuration depicted in FIG. 21 is produced by laminating the respective layers presented in Table 4.

### [Evaluation]

Adhesiveness and durability of the laminates obtained as described above are evaluated in the following manner.

### (Adhesiveness)

Initially, average peel strength between the respective layers of each laminate is measured. This average peel strength is measured by using the method for measuring laminate average peel strength as explained in the first embodiment. Subsequently, the measured average peel strength is evaluated on the basis of the following criteria. Each of Tables 2, 3, and 4 presents the lowest average peel strength between the respective layers of each laminate. Moreover, each of Tables 2, 3, and 4 presents a position of an interface having the lowest average peel strength of each laminate.
Good: All values of the average peel strength between the respective layers are 3.5 N/cm or higher.
Poor: At least one value of the average peel strength between the respective layers is lower than 3.5 N/cm.

### (Anti-counterfeiting)

Anti-counterfeiting of each laminate is evaluated on the basis of the following criteria.
Good: At least either one of Condition (1) and Condition (2) presented below is met.
Poor: Neither Condition (1) nor Condition (2) is met.
Condition (1): All values of the average peel strength between the respective layers of the laminate are 3.5 N/cm or higher.
Condition (2): The interface having the lowest average peel strength is positioned between the coloring layers.

### (Maximum coloring OD)

Initially, a maximum coloring OD of each laminate is measured using a spectrophotometric densitometer "eXact" (manufactured by X-Rite, Inc.). Subsequently, coloring producibility is evaluated on the basis of the following criteria. Evaluation results are presented in Tables 2, 3, and 4.
Good: Maximum coloring OD is 1.0 or higher. An OD value of 1.0 at which a person is recognizable in a person drawing is designated as a criterion.
Poor: Maximum coloring OD is lower than 1.0. When the OD value is lower than 1.0, a person is difficult to recognize in a person drawing.

### (Color gamut retention rate after heating)

Initially, a*b* of each of coloring portions and non-coloring portions of the recording medium before and after heating is measured using the spectrophotometric densitometer "eXact" to calculate the color gamut. A color gamut retention rate after heating is obtained on the basis of the color gamut before and after heating. Subsequently, the color gamut retention rate after heating is evaluated on the basis of the following criteria. Evaluation results are presented in Tables 2, 3, and 4.
Good: The color gamut retention rate after heating is 80% or higher.
Poor: The color gamut retention rate after heating is lower than 80%.
Note that a sufficient color expression of a person is achievable in a person drawing in a state where the color gamut retention rate is 80% or higher.

**[Table 2]**

| | | Practical example 1 | Practical example 2 | Practical example 3 |
|---|---|---|---|---|
| 0 verlay layer | | PC | PC | PC |
| Recording medium | (12) Protection layer | PET | PC | PC |
| | | 0CA | 0CA | 0CA |
| | | UV-cut layer | UV-cut layer | UV-cut layer |
| | | UV resin | UV resin | UV resin |
| | (11) Binder layer | 0CA | 0CA | 0CA |
| | (10) Insulation layer | UV resin | UV resin | UV resin |
| | (9) Coloring layer | Coloring layer Y1 | Coloring layer Y1 | Coloring layer Y2 |
| | (8) Binder layer | 0CA | 0CA | 0CA |
| | (7) Insulation layer | UV resin | UV resin | UV resin |
| | (6) Coloring layer | Coloring layer C1 | Coloring layer C1 | Colo ring layer C2 |
| | (5) Binder layer | 0CA | 0CA | 0CA |
| | (4) Insulation layer | UV resin | UV resin | UV resin |
| | (3) Coloring layer | Coloring layer M1 | Coloring layer M1 | Coloring layer M2 |
| | (2) Binder layer | 0CA | 0CA | 0CA |
| | (1) Base material | PET | PC | PC |
| Base material | | PC | PC | PC |
| Adhesiveness | Average peel strength [N/cm] | 0.3 | 0.3 | 7.0 |
| | Evaluation result | Poor | Poor | Good |
| | Interface having lowest average peel strength | Interface betw een (6) coloring layer and (7) insulation layer | Interface between (6) coloring layer and (7) insulation layer | Interface between UV-cut layer and 0CA in (12) protection layer |
| Anti-counterfeiting | Evaluation result | Good | Good | Good |
| Color producibility | Evaluation result | Good | Good | Poor |
| Color gamut retention rate | Evaluation result | Good | Good | Good |

**[Table 3]**

| | | Practical example 2 | Practical example 4 | Practical example 5 | Practical example 6 |
|---|---|---|---|---|---|
| Overlay layer | | PC | PC | PC | PC |
| Recording medium | (12) Protection layer | PC | PC | PC | PC |
| | | 0CA | 0CA | 0CA | 0CA |
| | | UV-cut layer | UV-cut layer | UV-cut layer | UV-cut layer |
| | | UV resin | UV resin | UV resin | UV resin |
| | (11) B in der layer | 0CA | 0CA | 0CA | 0CA |
| | (10) Insulation layer | UV resin | UV resin | UV resin | UV resin |
| | | | | Matrix polymer layer | 0CA |
| | (9) Coloring layer | Coloring layer Y1 | Coloring layer Y1 | Coloring layer Y1 | Coloring layer Y1 |
| | (8) Binder layer | 0CA | 0CA | 0CA | 0CA |
| | (7) Insulation layer | UV resin | None | UV resin | UV resin |
| | | | | Matrix polymer layer | 0CA |
| | (6) Coloring layer | Coloring layer C1 | Coloring layer C1 | Coloring layer C1 | Coloring layer 1 |
| | (5) Binder layer | 0CA | 0CA | 0CA | 0CA |
| | (4) Insulation layer | UV resin | None | UV resin | UV resin |
| | | | | Matrix polym er layer | 0CA |
| | (3) Coloring layer | Coloring layer M 1 | Coloring layer M 1 | Coloring layer M 1 | Coloring layer M 1 |
| | (2) Binder layer | 0CA | None | None | None |
| | (1) Base material | PC | None | None | None |
| Base material | | PC | PC | PC | PC |
| Adhesiveness | Average peel strength [N/cm] | 0.3 | 6.5 | 5.0 | 7.0 |
| | Evaluation result | Poor | Good | Good | Good |
| | Interface having lowest average peel strength | Interface betw een (6) coloring layer and (7) insu lation layer | Interface between UV-cut layer and 0 CA in (12) protection layer | Interface between UV-cut layer and OCA in (12) protection layer | Interface between UV-cut layer and OCA in (12) protection layer |
| Anti-counterfe iting | Evaluation result | Good | Good | Good | Good |
| Color producibility | Evaluation result | Good | Good | Poor | Good |
| Color gam ut retention rate | Evaluation result | Good | Poor | Good | Good |

| [Table 4] | | | | | | |
|---|---|---|---|---|---|---|
| | | P ractica l exam p le 2 | Practical example7 | Practical example 8 | Practice l exam p le 9 | Practical example 10 |
| Overlay layer | | PC | PC | PC | PC | PET |
| Record ing m ed ium | (12) Protection layer | PC | PC | PC | PC | PET |
| | | OCA | 0CA | 0CA | 0CA | OCA |
| | | UV-cut layer | UV-cut layer | U V-cut layer | UV-cut layer | UV-cut layer |
| | | UV resin | UV resin | UV resin | UV resin | UV resin |
| | (11) Binder layer | 0CA | 0CA | 0CA | 0CA | 0CA |
| | (10) Insulation layer | UV resin | None | None | None | None |
| | (9) Coloring layer | Coloring layer Y1 | Coloring layer Y1 | Coloring layer Y1 | Coloring layer Y1 | Coloring layer Y1 |
| | (8) Binder layer | 0CA | None | None | None | None |
| | (7) Insulation layer | UV resin | PC | PC | PET processed for easy adhesion | PET processed for easy adhesion |
| | | | | Matrix polym er layer | | |
| | (6) Coloring layer | Coloring layer C1 | Coloring layer C1 | Coloring layer C1 | Coloring layer C1 | Coloring layer C1 |
| | (5) Binder layer | 0CA | None | None | None | 0CA |
| | (4) Insulation layer | UV resin | PC | PC | PC | UV resin |
| | | | | | | 0CA |
| | (3) Coloring layer | Coloring layer M1 | Coloring layer M1 | Coloring layer M1 | Coloring layer M1 | Coloring layer M1 |
| | (2) Binder layer | 0CA | None | None | None | None |
| | (1) Base material | PC | None | None | None | PET processed for easy adhesion |
| Base material | | PC | PC | PC | PC | PET |
| Adhesiveness | Average peel strength [N/cm] | 0.3 | 1.0 | 6.0 | 7.0 | 7.0 |
| | Evaluation result | Poor | Poor | Good | Good | Good |
| | Interface having lowest average peel strength | Interface between (6) coloring layer and (7) insu lation layer | Interface between (6) coloring layer and (7) insu lation layer | Interface between UV-out layer and 0CA in (12) protection layer | Interface between UV-cut layer and 0CA in (12) protection layer | Interface between UV-cut layer and 0CA in (12) protection layer |
| Anti-counterfeiting | Evaluation result | Good | Good | Good | Good | Good |
| Color producibility | Evaluation result | Good | Good | Good | Good | Good |
| Color gamut retention rate | Evaluation result | Good | Good | Good | Good | Good |

The following describes details of the respective components included in Tables 2, 3, and 4.
PC: PC film
PET: PET film
PET processed for easy adhesion: PET film processed for easy adhesion (manufactured by Mitsubishi Chemical Corporation, "DIAFOIL" (registered trademark))
OCA: Optical Clear Adhesive
UV resin: UV-curable resin layer (acryl resin layer for hard coat)
Matrix polymer layer: resin layer including polymer of type identical to matrix polymer contained in adjoining coloring layer (specifically, polycarbonate resin layer)
Coloring layer Y1: coloring layer containing leuco pigment producing yellow, developer, and polycarbonate resin, and having 58 mass% for content of polycarbonate resin in coloring layer
Coloring layer Y2: coloring layer containing leuco pigment producing yellow, developer, and polycarbonate resin, and having 68 mass% for content of polycarbonate resin in coloring layer
Coloring layer C1: coloring layer containing leuco pigment producing cyan, developer, and polycarbonate resin, and having 65 mass% for content of polycarbonate resin in coloring layer
Coloring layer C2: coloring layer containing leuco pigment producing cyan, developer, and polycarbonate resin, and having 75 mass% for content of polycarbonate resin in coloring layer
Coloring layer M1: coloring layer containing leuco pigment producing magenta, developer, and polycarbonate resin, and having 58 mass% for content of polycarbonate resin in coloring layer
Coloring layer M2: coloring layer containing leuco pigment producing magenta, developer, and polycarbonate resin, and having 68 mass% for content of polycarbonate resin in coloring layer

The following is recognizable from Tables 2, 3, and 4.

When the intermediate layer between the coloring layers includes a matrix polymer layer, a UV-curable resin layer, and a binder layer, adhesiveness between the coloring layers and the intermediate layer can improve (see evaluation results of Practical example 5).

When the intermediate layer between the coloring layers includes a binder layer, a UV-curable resin layer, and a binder layer, adhesiveness between the coloring layers and the intermediate layer can improve (see evaluation results of Practical examples 6 and 10).

When the intermediate layer between the coloring layers includes a matrix polymer layer and a film, adhesiveness between the coloring layers and the intermediate layer can improve (see evaluation results of Practical example 8).

When the intermediate layer between the coloring layers includes a film processed for easy adhesion, adhesiveness between the coloring layers and the intermediate layer can improve (see evaluation results of Practical examples 9 and 10).

### (Reference examples 3-1 to 3-5)

A PC film 25 um in thickness, a layer 5 um in thickness and containing polycarbonate resin, and a PC film 25 um in thickness are laminated, and then pressure-heated at a temperature of 180°C and fused to obtain a sample. The layer containing polycarbonate resin used herein is a layer having a composition presented in Table 5.

### (Adhesiveness)

Initially, average peel strength between the respective layers of the sample is measured. This average peel strength is measured by using the method for measuring laminate average peel strength as explained in the first embodiment. Subsequently, the measured average peel strength is evaluated on the basis of the following criteria.
Good: All values of the average peel strength between the respective layers are 3.5 N/cm or higher.
Poor: At least one value of the average peel strength between the respective layers is lower than 3.5 N/cm.

Table 5 and FIG. 27 present evaluation results. Note that the average peel strength presented in Table 5 indicates average peel strength between the layer containing polycarbonate resin and the PC film.

**[Table 5]**

| | | Reference example 3-1 | Reference example 3-2 | Reference example 3-3 | Reference example 3-4 | Reference example 3-5 | Reference example 3-6 | Reference example 3-7 | Reference example 3-8 |
|---|---|---|---|---|---|---|---|---|---|
| Layer configuration of sample | | PC film (thickness: 25 µm ) | | | | | | | |
| | | PC resin containing layer (thickness: 5 µm ) | | | | | | | |
| | | PC film (thickness: 25 µm ) | | | | | | | |
| Com position of PC resin containing layer | Matrix polymer [mass% ] | 100 | 92 | 84 | 82 | 80 | 78 | 76 | 67 |
| | Developer [mass% ] | 0 | 8 | 16 | 18 | 20 | 22 | 24 | 33 |
| Adhesiveness | Average peel strength [N/cm] | 9.0 | 9.0 | 9.0 | 2.7 | 2.1 | 1.6 | 1.4 | 0.7 |
| | Evaluation result | Good | Good | Good | Poor | Poor | Poor | Poor | Poor |

The following describes details of the respective components and the respective materials included in Table 5.
Matrix polymer: polycarbonate resin
Developer: compound expressed by Formula (3)

It is recognizable from Table 5 and FIG. 27 that peel strength of 3.5 N/cm or higher is obtainable in a state where a proportion of the developer in a total amount of the developer and the matrix polymer is lower than 18 mass%.

### [Reference Signs List]

10, 40: Laminate
11, 21, 51: Base material
12, 13: Adhesive layer
13A, 16A: Container portion
14: Overlay layer
15: Intermediate layer
15A: IC chip
16: Fine printing layer
17: Barrier layer
20, 20A, 20B, 20C, 20D, 20E, 20F, 20G, 20H, 50: Recording medium
20HL: Hole
22, 25, 28, 33: Binder layer
23, 26, 29, 34, 26A, 29A, 34A, 26B, 29B, 34B: Diffusion reduction layer
24, 27, 30: Coloring layer
26A1, 29A1, 34A1: Resin layer
26A2, 29A2, 34A2, 26B2, 29B2, 34B2: UV-curable resin layer
26B1, 29B1, 34B1: Binder layer
31, 36: Protection layer
32A, 32B, 32C, 35A, 35B, 35C, 37A, 37B, 37C, 38A, 38B, 38C: Intermediate layer
36A: UV-curable resin layer
36B: UV-cut layer
36C: Binder layer
36D: Base material
60: Test piece
60A, 60B: Adherend
61: Tensile member
62: Clamp device
71: Test board
72: Jig
73A, 73B: Movable roll
100: Smartphone
200: Laptop personal computer
300: Cosmetic container
400: Booklet

## Claims

1. A recording medium comprising:
a plurality of coloring layers; and
at least one diffusion reduction layer, wherein
each of the coloring layers includes a coloring compound that is electron-donative, a developer that is electron-acceptive, and matrix resin,
the diffusion reduction layer is provided between the coloring layers adjacent to each other, and
the diffusion reduction layer is capable of reducing diffusion of the coloring compound between the coloring layers adjacent to each other during heating of the recording medium.

2. The recording medium according to claim 1, further comprising:
at least one binder layer, wherein
the binder layer is provided between the diffusion reduction layer and the coloring layers.

3. The recording medium according to claim 1, wherein average peel strength between the respective layers of the recording medium is 3.5 N/cm or higher.

4. The recording medium according to claim 1, wherein average peel strength between the coloring layers adjacent to each other is lower than 3.5 N/cm.

5. The recording medium according to claim 1, wherein the matrix resin contains polycarbonate resin.

6. The recording medium according to claim 1, wherein a temperature of the heating ranges from 120°C to 200°C.

7. The recording medium according to claim 1, wherein a temperature of the heating ranges from 160°C to 200°C.

8. The recording medium according to claim 1, wherein the diffusion reduction layer is a resin layer that has no tackiness in an atmosphere of a standard state at a temperature of 23°C ± 1°C and relative humidity of 50% ± 5%.

9. The recording medium according to claim 1, wherein the diffusion reduction layer has a Young's modulus of 100 MPa or higher.

10. The recording medium according to claim 1, wherein the diffusion reduction layer has a Young's modulus of 2000 MPa or higher.

11. The recording medium according to claim 1, wherein the diffusion reduction layer is a resin layer that has pencil hardness of F or higher.

12. The recording medium according to claim 1, wherein the diffusion reduction layer has a glass transition temperature of 130°C or higher.

13. The recording medium according to claim 1, wherein the diffusion reduction layer contains amorphous resin.

14. The recording medium according to claim 1, wherein the diffusion reduction layer contains crystalline resin.

15. The recording medium according to claim 1, wherein the diffusion reduction layer contains UV-curable resin.

16. A laminate comprising:
the recording medium according to claim 1;
a base material; and
an overlay layer, wherein
the recording medium is provided between the base material and the overlay layer.

17. The laminate according to claim 16, wherein the base material and the recording medium are bonded to each other by fusion or a thermal adhesive, and the recording medium and the overlay layer are bonded to each other by fusion or a thermal adhesive.
